# EUROPEAN PATENT APPLICATION

(11) **EP 1 796 324 A1**
(43) Date of publication of application: **13.06.2007**
(21) Application number: 05788176.5
(22) Date of filing: 29.09.2005
(51) Int. Cl.: H04L 12/56

(54) **COMMUNICATION SYSTEM, MOBILE TERMINAL, AND AUTHENTICATION SERVER**

(30) Priority: 30.09.2004 JP 2004289304
(71) Applicant: MATSUSHITA ELECTRIC INDUSTRIAL CO., LTD., Osaka 571-8501 (JP)
(72) Inventor: ASO, Keigo c/o Matsushita Electric Industrial Co Ltd, Chuo-ku, Osaka-shi,Osaka 540-6319 (JP); HIRANO, Jun c/o Matsushita Electric Industrial Co Ltd, Chuo-ku, Osaka-shi,Osaka 540-6319 (JP)
(74) Representative: Grünecker, Kinkeldey, Stockmair & Schwanhäusser Anwaltssozietät
(86) International application number: PCT/JP2005/017945
(87) International publication number: WO 2006/035871

(57) **Abstract**

A technique that employs, for the purpose, the allocation of the optimal home agent (HA) for a mobile terminal (MN) that has moved between domain networks is disclosed. According to this technique, when a MN 10 has performed a handover between domain networks (e.g., a handover from an external domain network 23 to an external domain network 33), an authentication server (AAAh server 400) present in a home domain network 43 of the MN transmits a request to a plurality of authentication servers that have a roaming relationship for measuring a HA selection condition transmitted by a MN 10, and selects the optimal HA based on the obtained HA selection condition information (the measurement results for the HA selection condition). Further, a HA that is most suitable for a condition can also be selected by referring to a roaming condition relative to each authentication server.

## Description

### TECHNICAL FIELD

The present invention relates to a communication system, a mobile terminal and an authentication server, and relates in particular to a technique for dynamically allocating a home agent (HomeAgent: hereafter referred to as a HA) at the time of movement of a mobile node (MobileNode: hereinafter referred to as a MN) in a mobile IPv6 (Mobility support for IPv6: hereafter referred to as a MIPv6).

### BACKGROUND ART

The MIPv6 technique is conventionally known as a technique for obtaining the transmission of a MN across an IPv6 network. This technique is one whereby a HA present on the home link of a MN holds a correlation between the address (Care-of Address: hereafter referred to as a CoA), which was obtained at the moving destination of the MN, and an address (home address: hereinafter referred to as a HoA) on the home link, and intercepts a packet addressed to the HoA of the MN and transmits the packet to a corresponding CoA, so that a MN, even when away from home, can receive a packet.

The HoA of a MN defined according to this MIPv6 is an address that is predesignated at an early stage, and basically, during movement, this address is employed as the HoA. However, in a case wherein the prefix of the HA on the home link is changed or the HA is replaced while the MN is powered OFF, even though the MN, when powered on again, is to employ the HA that was used before, the MIPv6 process can not be performed because the address of the HA, or the HoA of the MN is ineffective.

As a method for coping with such a problem, DHAAD (Dynamic Home Agent Address Discovery) and MPD (Mobile Prefix Discovery) are defined by the MIPv6. DHAAD is a mechanism that enables a MN to obtain a new address for a HA even in a case wherein the address of the HA on the home link is changed, or the HA is replaced by another HA. When the MN transmits a Request message to the HomeAgent-Anycast address on the home link, the address list for all the HAs present on a Home network can be obtained. The MN transmits, in order, a Binding Update message (hereafter a BU message) to the addresses on this list until the registration of Binding information is successful.

On the other hand, MPD is a mechanism used to notify the MN that the prefix of a HA has been changed. The MN can confirm the change in the prefix by transmitting a MPS (Mobile Prefix Solicitation) to the current HA, and also, the HA can transmit a MPA (Mobile Prefix Advertisement) to the MN as notification of the change in the prefix. If updated prefix information is included in the MPA, the MN transmits a BU message to the HA to replace the Binding information with the new one.

However, various problems, including security, exist that must be dealt with in order to employ mechanisms such as the above described DHAAD and MPD for an actual operation. Above all, when the DHAAD is employed as a mechanism for dynamically allocating a HA and a HoA when the MN is powered on (hereafter referred to as executing a bootstrap), this mechanism can not cope with a change in the prefix of the HA.

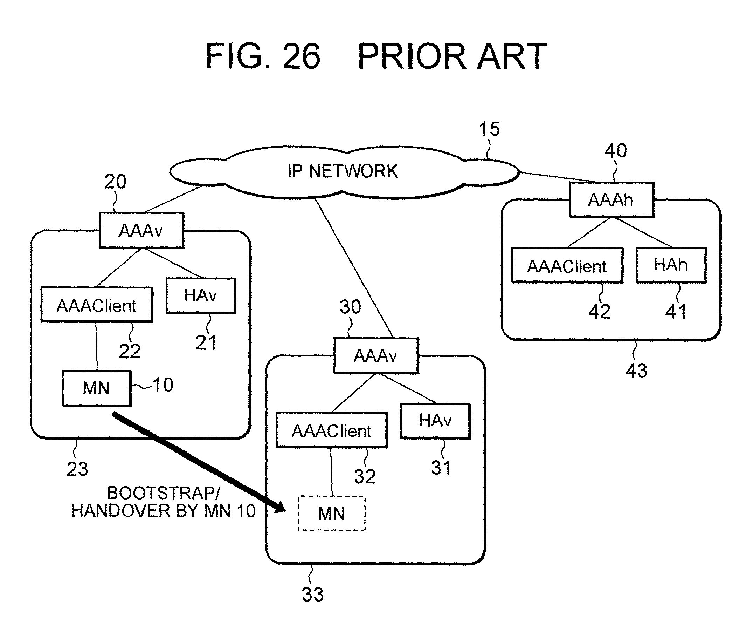

In non-patent document 1 below, it is proposed that, when a bootstrap is executed for a MN, the authentication process is performed, and at the same time, the allocation of a HA is also performed. A mechanism for executing a bootstrap that is currently proposed will now be explained while referring to Fig. 26. A network system in Fig. 26 includes: an IP network (communication network) 15, such as the Internet; a plurality of external domain networks 23, 33 and 43, connected to the IP network 15; and AAA servers 20, 30 and 40, which manage these domains. It should be noted that, in Fig. 26, three external domain networks 23, 33 and 43 are shown as a plurality of external domain networks 23, 33 and 43. Furthermore, in order to identify a AAA server on a Home domain network, which is the home network of a MN, from a AAA server on a domain network other than the Home, a AAA server on the Home domain network of a MN 10 is defined as a AAAh server, and a AAA server on a domain network other than the Home domain network of the MN is defined as a AAAv server. In addition, a domain network other than the Home domain network is called an external domain network.

The external domain network 23 includes a AAAv server 20, which manages this domain; a MN 10, which is connected to the network of the domain; a AAAClient 22, which relays authentication data for the MN 10 to the AAA server; and a HAv 21, which manages positional information for the MN 10. Further, the external domain network 33 and the Home domain network 43 have the same connection form as the above described external domain network 23, by employing a AAAv server 30, a AAAh server 40, AAAClients 32 and 42 and HAvs 31 and 41.

As described in non-patent document 2 below, when the MN 10 has executed a bootstrap on the external domain network 33, at a moving destination, or has performed a handover from the external domain network 23 to the external domain network 33, the MN 10 transmits an authentication request message to the AAAClient 32. The AAAClient 32 converts the message into an appropriate AAA protocol, and transmits the AAA protocol to the AAAv server 30 in the same domain. When the AAAv server 30 determines that the MN 10 requesting authentication does not belong to the same domain, the AAAv server 30 requests that the AAAh server 40 of the Home domain network 43 of the MN 10 perform authentication.

At this time, when there is a HA to be allocated to the MN 10, the AAAv server 30 includes, in an authentication request transmitted to the AAAh server 40, information indicating allocation is available. When allocation of a HA by the AAAv server 30 is enabled, the AAAh server 40 performs only the authentication for the MN, and transmits the results as a reply message. When allocation is not available, the AAAh server 40 transmits a reply message that includes information indicating allocation of a HA in the same domain. As described above, at the bootstrap or handover time there are two patterns: a pattern for allocating a HA on the Home domain network and a pattern for allocating a HA on a domain network at a moving destination.

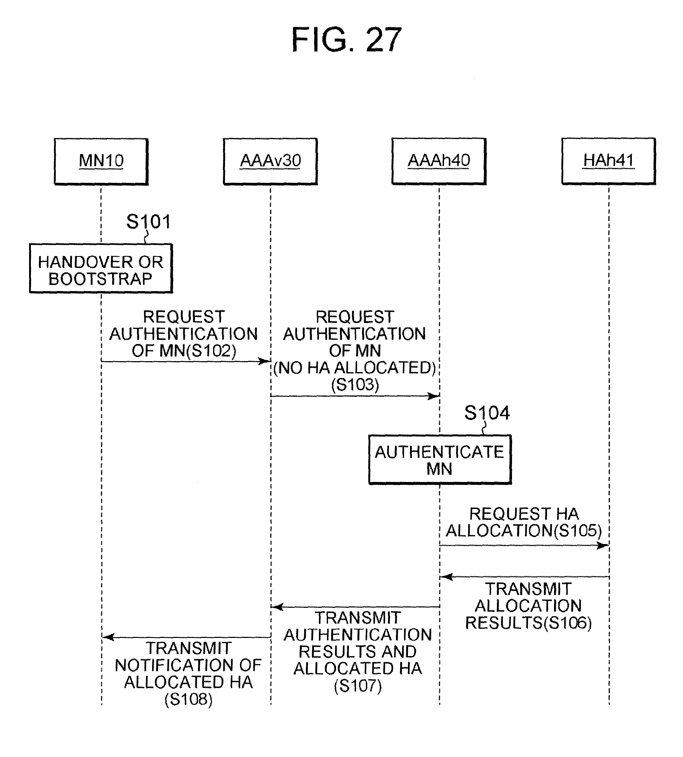

Fig. 27 is a sequence chart showing an overview of a case wherein the AAAv server 30 allocates no HA. When the MN 10 has performed a handover or executed a bootstrap (S101), the MN 10 transmits a message to the AAAv server 30 to request the authentication of the MN 10 (S102). The AAAv server 30 transfers, to the AAAh server 40 present on the Home domain network of the MN 10, the authentication request, including information that indicates there is no HA to be allocated (S103). Upon receiving the authentication request, the AAAh server 40 performs the authentication for the MN 10 (S104), selects a HA present on the same network, and transmits a HA allocation request to the HA (HAh 41) (S105). When the HA allocation results are received from the HAh 41 (S106), and when, as a result, the allocation of the HAh 41 is enabled, the authentication results, including information for the HAh 41, are transmitted to the AAAv server 30 (S107). The AAAv server 30 transmits to the MN 10 information related to the HAh 41 (S108).

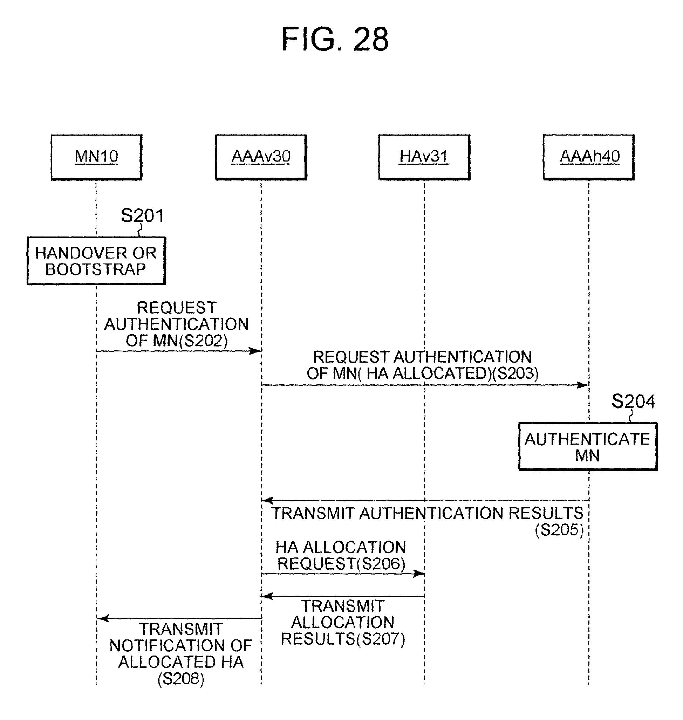

Fig. 28 is a sequence chart showing an overview for a case wherein the AAAv server 30 performs a HA allocation. When the MN 10 has performed a handover or executed a bootstrap (S201), the MN 10 transmits a message to the AAAv server 30 to request authentication of the MN 10 (S202). The AAA server 30 transfers to the AAAh server 40, on the Home domain network 43 of the MN 10, the authentication request, including information that indicates a HA is to be allocated (S203). Upon receiving the authentication request, the AAAh server 40 performs only the authentication of the MN (S204), and transmits the results obtained to the AAAv server 30 (S205). Upon receiving the authentication results, the AAAv server 30 transmits a HA allocation request to a HA to be allocated (S206), and receives the results from a HAv 31 (S207). When allocation is enabled, information related to the HAv 31 is transmitted to the MN 10 (S208).
Non-Patent Document 1: J.Kempf, J.Arkko, "The Mobile IPv6 Bootstrapping Problem", draft-kempf-mip6-bootstrap-00.txt, February 14 2004
Non-Patent Document 2: Stefano M. Faccin, Frank Le, Basavaraj Patil, Charles E. Perkins, "Diameter Mobile IPv6 Application", draft-le-aaa-diameter-mobileIPv6-03.txt, April 2003

However, according to the techniques disclosed in non-patent document 1 and non-patent document 2, for dynamically allocating a HA, a HA to be allocated to a MN is limited to either a HA present on a domain network at a moving designation, a HA that was used on a domain network before movement, or a HA on the Home domain network of the MN, and the state of a HA to be allocated and a condition applicable to a HA requested by a MN are not considered.

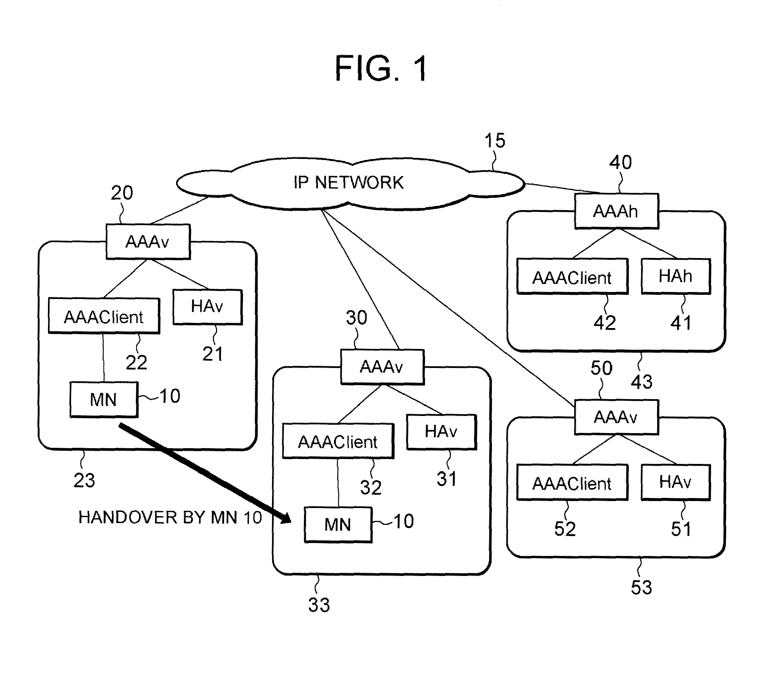

Fig. 1 is a diagram showing a system configuration for explaining a first example problem for a conventional dynamic HA allocation technique. In order to cope with a case wherein, when a MN 10 has performed a handover from a external domain network 12 to an external domain network 33, or has executed a bootstrap on the external domain network 33, a HAv 31 on the external domain network can not be allocated for a specific reason, the MN 10 considers that a HAv 21 that was used before movement is to be continuously employed, and requests the continuous usage of the HAv 21, while including information for the HAv 21 in an authentication request to be transmitted to a moving destination.

In a case wherein a AAAv server 30 can not allocate the HAv 31 in the same domain, the AAA server 30 transfers to a AAAh server 40, on a Home domain network 43 of the MN 10, the authentication request received from the MN 10. The AAAh server 40 performs the authentication for the MN 10, and thereafter, based on information included in the authentication request message, transmits a request for the continuous use of the HAv 21 to the AAAv server 20, where the HAv 21, which is the old HA of the MN 10, is present.

When the use of the HAv 21 is approved by the AAAv server 20, the continuous use approval results are transmitted to the AAAv 40, together with the authentication results. Thus, after it is moved in another domain, the MN 10 can continuously employ the HAv 21 that was used, relative to the AAAv server 20, before moving.

However, as shown in Fig. 1, if a HA having a better condition than the HAv 21 on the external domain network 23 is present on the external domain network 53, the AAAh server 40 will not know of the presence of this HAv 51, and the HAv 51 will not be considered as a HA choice to be allocated. Thus, it is impossible for the optimal HA to be allocated to the MN 10.

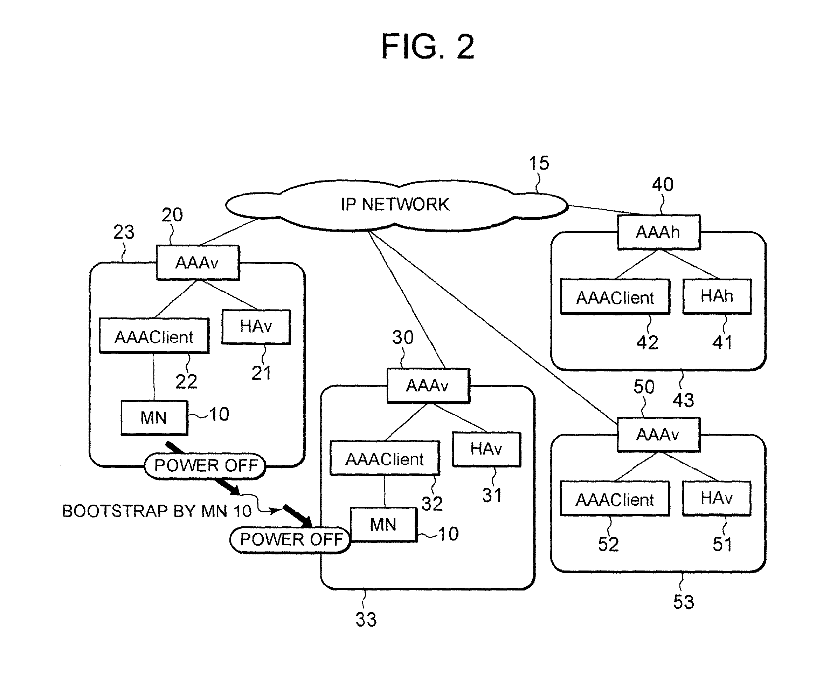

Fig. 2 is a diagram showing a system configuration for explaining a second example existing problem with the conventional dynamic HA allocation technique. A MN 10 operating on an external domain network 23 is powered off while the MN 10 is present in the pertinent domain. And the MN 10 in this state is moved to an external domain network 33, and is thereafter powered on and execution of a bootstrap is begun. In a case wherein, at this time, allocation of a HAv 31 on the external domain network 33 is disabled for a specific reason, inevitably, the only a HA that can be allocated for use by the MN 10 is a HAh 41 on a Home domain network 43.

A reason for allocating the HAh 41 on the Home domain network 43, instead of the HAv 21 used on the external domain network 23, is that, unlike in the case of a handover, a time difference exists between before and after the MN 10 is moved in the power OFF state, so that, when the MN 10 is powered on again, the HAv 21 that was used on the external domain network 23 can no longer be regarded as near, but as at a distance.

Therefore, either the HAv 31 on the external domain network 33, at a moving destination, or the HAh 41, on the Home domain network 43, will be selected as a HA to be allocated the MN 10 that has executed a bootstrap. In a case wherein the HAv 31 on the external domain network 33, at the moving destination, can not be allocated, there is no alternative selection available, other than the allocation of the HAh 41 on the Home domain network 43.

### DISCLOSURE OF THE INVENTION

While taking the above described problems into account, one objective of the present invention is to provide a communication system that can allocate an optimal HA for a MN that has performed a handover or executed a bootstrap after moving across the border of a home domain, and a mobile terminal and an authentication server.

In order to resolve the problems, according to the present invention, a first invention is a communication system, which, when a mobile terminal is moved among a plurality of domain networks that are connected by an IP network and that provide a service for securing mobility for the mobile terminal, authenticates the mobile terminal and dynamically allocates, for the mobile terminal, a moving destination management server for managing a moving destination, comprising:
first authentication means, belonging to a first domain network included in the plurality of domain networks and having a mobile terminal authentication function;
second authentication means, belonging to a second domain network, which is included in the plurality of domain networks and which is a home network for the mobile terminal, and having a mobile terminal authentication function; and
third authentication means, belonging to a third domain network, for which a roaming relationship is established with the second domain network, and having a mobile terminal authentication function,
wherein, when the mobile terminal is moved from an arbitrary domain network to the first domain network, the second authentication means receives an authentication request message from the mobile terminal through the authentication means, performs an authentication for the mobile terminal, transmits a moving destination management server allocation request message to the third authentication means, employs information, which is based on the moving destination management server allocation request message, for enabling/disabling allocation for the mobile terminal of a moving destination management server that belongs to the third domain network, and selects a moving destination management server, to be allocated for the mobile terminal.

Further, the first invention is characterized in that the second authentication means transmits to the third authentication means the moving destination management server allocation request message, including a moving destination management server selection condition determined by the second authentication means.

Furthermore, the first invention is characterized in that the second authentication means transmits to the third authentication means the moving destination management server allocation request message, including a moving destination management server selection condition determined by the first authentication means.

Additionally, the first invention is characterized in that the second authentication means transmits to the third authentication means the moving destination management server allocation request message, including a moving destination management server selection condition that is received from the mobile terminal through the first authentication means. It should be noted that the moving destination management server selection condition received by the second authentication means may be provided for the authentication request message transmitted by the mobile terminal.

Moreover, the first invention is characterized in that the second authentication means transmits to the third authentication means the moving destination management server allocation request message, including a plurality of selection conditions, chosen from among moving destination management server selection conditions determined by the second authentication means, a moving destination management server selection condition determined by the first authentication means, and a moving destination management server selection condition received from the mobile terminal through the first authentication means.

Also, the invention is characterized in that the second authentication means selects a moving destination management server, to be allocated to the mobile terminal, by employing the allocation enabling/disabling information and roaming information related to the plurality of domain networks.

Further, the first invention is characterized in that:
the second authentication means transmits to the third authentication means the moving destination management server allocation request message, including a moving destination management server selection condition; and
the third authentication means obtains selection condition information related to the moving destination management server selection conditions for the third domain network, and transmits the selection condition information as the allocation enabling/disabling information to the second authentication means.

Furthermore, in order to resolve the above problems, according to the present invention, a second invention is a mobile terminal, which is capable of moving among a plurality of domain networks connected by an IP network and which is capable of being connected to a communication system that includes: first authentication means, belonging to a first domain network included in the plurality of domain networks and having a mobile terminal authentication function; second authentication means, belonging to a second domain network that is included in the plurality of domain networks and is a home network for the mobile terminal, and having a mobile terminal authentication function; and third authentication means, belonging to a third domain network, for which a roaming relationship is established with the second domain network, and having a mobile terminal authentication function, and to which a moving destination management server that manages a moving destination is to be dynamically allocated, the communication system comprising:
message transmission means, for transmitting, when the mobile terminal is moved from an arbitrary domain to the first domain network, an authentication request message through the first authentication means to the second authentication means; and
information acquisition means for obtaining, from the second authentication means through the first authentication means, information for the moving destination management server allocated by the second authentication means.

Furthermore, the second invention further comprises:
selection condition provision means, for providing a moving destination management server selection condition for the authentication request message.

In order to resolve the above problems, according to the present invention, a third invention is an authentication server, which is included in a communication system that, when a mobile terminal is moved between a plurality of domain networks that are connected by an IP network and that provide a service for obtaining mobility for the mobile terminal, authenticates the mobile terminal and dynamically allocates to the mobile terminal a moving destination management server for managing a moving destination, comprising:
authentication request message reception means, for receiving an authentication request message from the mobile terminal;
authentication means, for employing the authentication request message to authenticate the mobile terminal;
allocation request message transmission means for transmitting, after authentication by the authentication means is completed, a moving destination management server allocation request message to a different authentication server;
allocation enabling/disabling information reception means, for receiving, from the different authentication server, allocation enabling/disabling information about the moving destination management server relative to the mobile terminal;
moving destination management server selection means, for employing the allocation enabling/disabling information to select the moving destination management server to be allocated to the mobile terminal; and
moving destination management server notification means, for notifying the mobile terminal of the selected moving destination management server.

Additionally, the third invention further comprises:
selection condition provision means, for providing a moving destination management server selection condition for the moving destination management server allocation request message.

Moreover, the invention further comprises:
selection condition determination means, for determining the moving destination management server selection condition and for notifying the selection condition provision means of the moving destination management server selection condition.

Further, the invention is characterized in that the moving destination management server selection condition is included in the authentication request message.

Also, the invention further comprises:
selection condition generation means, for voluntarily generating the moving destination management server selection condition.

Furthermore, the invention is characterized in that the selection condition determination means determines the moving destination management server selection condition, employing both a first moving destination management server selection condition, included in the authentication request message, and a second moving destination management server selection condition, voluntarily generated by the selection condition generation means.

Additionally, the third invention is characterized in that the moving destination management server selection means selects the moving destination management server to be allocated to the mobile terminal, using the allocation enabling/disabling information and roaming information related to the plurality of domain networks.

The present invention provides effects that, after the mobile terminal has performed a handover between domains or has executed a bootstrap, the mobile terminal can employ the optimal HA at the moving destination.

The present invention is for a communication system so constituted that the first domain network, which is the moving destination of a mobile terminal, the second domain network, which is the Home domain network of the mobile terminal where use of the HA is permitted, and the third domain network are connected by the IP network, and the mobile terminal can be moved among these domain networks. And as a method whereby, when the mobile terminal has performed a handover between these domain networks, or has executed a bootstrap in these domain networks, the AAAh server belonging to the second domain network selects a HA to be allocated for the mobile terminal, selection conditions, such as the number of hops, the status of the QoS path and the cost, are measured, and these data are employed to select the optimal HA. According to the above described arrangement, the AAAh server can allocate the optimal HA to the mobile terminal.

Further, in addition to the above described configuration, the communication system of this invention is so arranged that, when a HA in the second domain network is allocated to the mobile terminal, the mobile network employs the allocated HA as its own HA. With this arrangement, the mobile terminal can employ the optimal HA to transmit a packet to a communication side.

Furthermore, in addition to the above described configuration, the communication system of this invention is so arranged that the mobile terminal presents a selection condition to be used for the selection of a HA, and the optimal HA is selected based on this selection condition. With this arrangement, the AAA server can allocate a HA that matches a condition requested by the mobile terminal.

Additionally, in addition to the above described configuration, the communication system of this invention is so arranged that the AAAh server presents a selection condition to be used for the selection of a HA, and the optimal HA is selected based on this selection condition. With this arrangement, the AAA server can allocate, to the mobile terminal, a HA that matches a condition requested by the AAAh server.

Further, in addition to the above described configuration, the communication system of this invention is so arranged that both the mobile terminal and the AAAh server present selection conditions to be used for the selection of a HA, and the optimal HA is selected based on the selection conditions. With this arrangement, the AAA server can allocate, to the mobile terminal, a HA that matches a condition requested by the mobile terminal and a condition requested by the AAAh server.

Also, the communication system of the present invention is constituted so that the first domain network, which is the moving destination of a mobile terminal, the second domain, which is the Home domain network of the mobile terminal that is under a roaming contract, and the third domain network are connected by the IP network, and the mobile terminal can be moved among these domain networks. When the mobile terminal has performed a handover among these domain networks, or has executed a bootstrap, a condition for the roaming contracts with the other domains is employed to select the optimal HA. According to the above arrangement, the AAAh server can allocate the optimal HA to the mobile terminal.

Furthermore, in addition to the above described configuration, the communication system of this invention is so arranged that the MN presents a condition for the roaming contract used for the selection of a HA, and the optimal HA is selected based on the condition. With this arrangement, the AAAh server can allocate a HA that matches a condition requested by the mobile terminal.

Further, in addition to the above described configuration, the communication system of this invention is so arranged that the AAAh server presents a condition for the roaming contract used for the selection of a HA, and the optimal HA is selected based on the condition. With this arrangement, the AAAh server can allocate a HA that matches a condition requested by the AAAh server.

Also, in addition to the above described configuration, the communication system of this invention is so arranged that both the mobile terminal and the AAAh server present conditions for the roaming contract used for the selection of a HA, and the optimal HA is selected based on the conditions. With this arrangement, the AAAh server can allocate a HA that matches a condition requested by the mobile terminal and a condition requested by the AAAh server.

### BRIEF DESCRIPTION OF THE DRAWINGS

[Fig. 1] A specific diagram illustrating the configuration of a communication system used in common for the present invention and prior art.
[Fig. 2] A specific diagram illustrating the configuration of a communication system used in common for the present invention and the prior art.
[Fig. 3] A sequence chart illustrating the primary processing for a communication system according to a first embodiment of the present invention.
[Fig. 4] A sequence chart illustrating the primary processing for communication systems according to second to fifth embodiments of the present invention.
[Fig. 5] A block diagram illustrating an example configuration for a AAAh server according to the second embodiment of the present invention.
[Fig. 6] A flowchart illustrating the processing performed for the second embodiment of the present invention when the AAAh server receives an authentication request message, including a HA selection condition.
[Fig. 7] A flowchart illustrating the processing performed for the second embodiment of the present invention when the AAAh receives a selection condition information notification message.
[Fig. 8] A block diagram illustrating an example configuration for a AAAh server according to the third embodiment of the present invention.
[Fig. 9] A flowchart illustrating the processing performed for the third embodiment of the present invention when the AAAh server receives an authentication request message, including a HA selection condition.
[Fig. 10] A flowchart illustrating the processing performed for the third embodiment of the present invention when the AAAh server receives a selection condition information notification message.
[Fig. 11] A block diagram illustrating an example configuration for a AAAh server according to the fourth embodiment of the present invention.
[Fig. 12] A flowchart illustrating the processing performed for the fourth embodiment of the present invention when the AAAh server receives a selection condition information notification message.
[Fig. 13] A block diagram illustrating an example configuration for a AAAh server according to the fifth embodiment of the present invention.
[Fig. 14] A flowchart illustrating the processing performed for the fifth embodiment of the present invention when the AAAh server receives a selection condition information notification message.
[Fig. 15] A sequence chart illustrating the primary processing performed for a communication system according to a sixth embodiment of the present invention.
[Fig. 16] A sequence chart illustrating the primary processing for communication systems according to seventh and eighth embodiments of the present invention.
[Fig. 17] A block diagram showing an example configuration for a AAAh server according to the seventh embodiment of the present invention.
[Fig. 18] A flowchart illustrating the processing performed for the seventh embodiment of the present invention when the AAAh server receives an authentication request message.
[Fig. 19] A flowchart illustrating the processing performed for the seventh embodiment of the present invention when the AAAh server receives a selection condition information notification message.
[Fig. 20] A block diagram showing an example configuration for a AAAh server according to the eighth embodiment of the present invention.
[Fig. 21] A flowchart illustrating the processing performed for the eighth embodiment of the present invention when the AAAh server receives a selection condition information notification message.
[Fig. 22] A sequence chart illustrating the primary processing for a communication system according to a ninth embodiment of the present invention.
[Fig. 23] A block diagram showing an example configuration for a AAAh server according to the ninth embodiment of the present invention.
[Fig. 24] A flowchart illustrating the processing performed for the ninth embodiment of the present invention when the AAAh server receives an authentication request message.
[Fig. 25] A flowchart illustrating the processing performed for the ninth embodiment of the present invention when the AAAh server receives a HA allocation result notification message.
[Fig. 26] A specific diagram illustrating the configuration of a conventional communication system.
[Fig. 27] A sequence chart illustrating the primary processing for the conventional communication system.
[Fig. 28] A sequence chart illustrating the primary processing for the conventional communication system.

### BEST MODES FOR CARRYING OUT THE INVENTION

First to ninth embodiments of the present invention will now be described while referring to drawings. The configuration of a communication system shown in Fig. 1 or 2 is also employed as a reference to describe the first to the ninth embodiments of the present invention. In Figs. 1 and 2, a Home domain network 43 of a MN 10 and external domain networks 23, 33 and 53, which can be moving destination networks for the MN 10, are shown, and as authentication servers, AAA servers (an AAAh server 40 and AAAv servers 20, 30 and 50) are present in the individual domains. In this case, assume that when the MN 10 performs a handover between these domain networks or executes a bootstrap, the MN 10 receives authentication from the AAAh server 40 and the allocation of a HA to be employed.

Also in Figs. 1 and 2, AAAClients 22, 32, 42 and 52 are shown as those present between the individual AAA servers and the MN 10. In the explanation of the embodiments of this invention, all the components that can exist between the individual AAA servers and the MN 10 are regarded as a part of the authentication system, and are not especially described as AAA Clients. The present invention does not depend on the presence or absence of such a component.

### <First Embodiment>

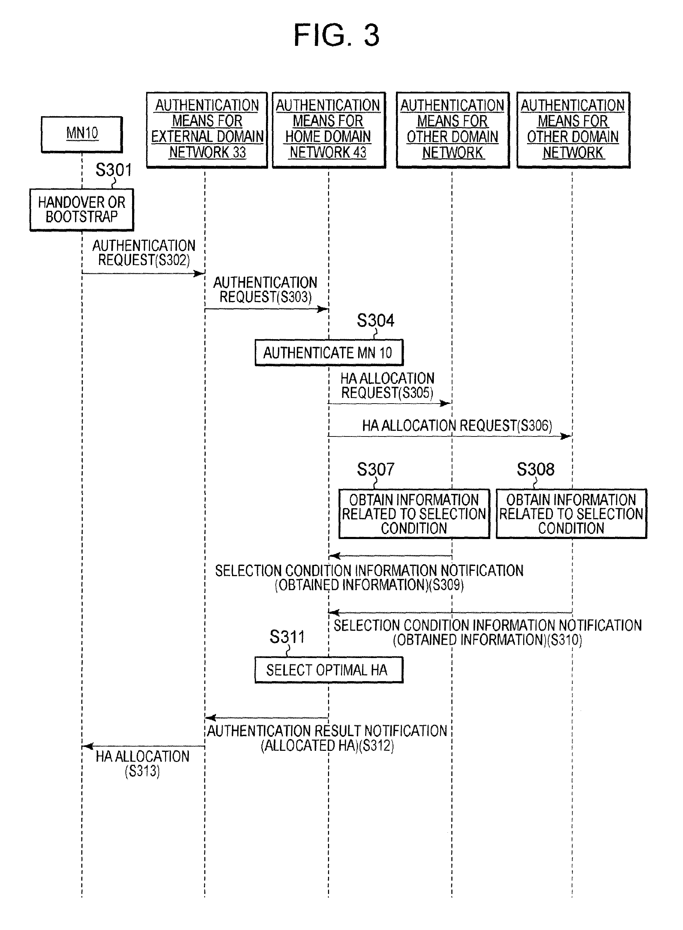

First, a first embodiment of the present invention will be described. Fig. 3 is a sequence chart illustrating the primary processing for the first embodiment of the present invention. It should be noted that the sequence chart in Fig. 3 is an illustration of only the primary processing related to the present invention.

The sequence chart in Fig. 3 is a diagram illustrating a message sequence in a case wherein the MN 10 has performed a handover from the Home domain network 43 to the external domain network 23, or has executed a bootstrap in the external domain network 23, or a case wherein the MN 10 has performed a handover from the external domain network 23 to the external domain network 33, or has executed a bootstrap in the external domain network 33.

It should be noted that the moving source and the moving destination of the MN 10 and the bootstrap location are not limited to these. And since the process performed at the time of a handover between the Home domain network 43 and the external domain network 23, or at the time of the bootstrap in the external domain network 23 is substantially the same as the primary processing of the present invention performed at the time of a handover between the external domain network 23 and the external domain network 33, or at the time of the bootstrap in the external domain network 33, for the first embodiment of the present invention, an explanation will be given for the second case wherein a handover has been performed from the external domain network 23 to the external domain network 33, or a bootstrap has been executed in the external domain network 33.

When the MN 10 has performed a handover from the external domain network 23 to the external domain network 33, or has executed a bootstrap in the external domain network 33 (S301), in addition to a message to request authentication of the MN 10, the MN 10 transmits to the authentication means of the external domain network 33, a selection condition (HA selection condition) that it is desired be considered for selection of a HA (S302).

Since the authentication means of the external domain network 33 is not authentication means for the Home domain network of the MN 10, the authentication request is transferred to the authentication means of the Home domain network 43 of the MN 10 (S303), which then performs an authentication for the MN 10 (S304).

After authentication is completed, HA allocation request messages are transmitted to the authentication means of the other domain networks to obtain information that is used for the selection of a HA to be allocated for the MN 10 and is related to a HA selection condition presented by the MN 10 (S305 and S306). It should be noted that a HA selection condition that the authentication means of the Home domain network 43 desires be considered may be added to this message.

Upon receiving the HA allocation request message, the authentication means of the other domain networks obtain information (HA selection condition information) that is included in this message and is related to the HA selection condition (S307 and S308), and transmit the information as a selection condition information notification message to the authentication means of the Home domain network 43 (S309 and S310).

The authentication means of the Home domain network 43 selects the optimal HA based on the HA selection condition information that is obtained from the other domain networks (S311), and transmits an authentication results notification message to the authentication means of the external domain network 33 (S312) in order to allocate the selected HA for the MN 10 (S312). Upon receiving the authentication result notification message, the authentication means of the external domain network 33 transmits to the MN 10 the authentication results, together with the HA information included in the message (S313).

It should be noted that the number of hops, the status of a QoS path or the cost, for example, can be employed as a HA selection condition.

Further, for the selection of a HA, not only the HA selection condition information, but also roaming information, relative to another domain held by the authentication means of the Home domain network 43, may be taken into account. Further, instead of the MN 10, the authentication means of the Home domain network 43 may present the HA selection condition, or both the MN 10 and the authentication means of the Home domain network 43 may present the HA selection condition.

By employing this arrangement, a HA can be allocated to the MN 10 based on both the HA selection condition presented by the MN 10 and the HA selection condition presented by the authentication means of the Home domain network 43. Thus, as the effects obtained, a data packet dispatched by the MN 10, or a data packet dispatched by a communication side to the home address of the MN 10, is transmitted through the HA along the optimal path. Further, since roaming information held by the authentication means of the Home domain network 43 is also taken into account for the selection of a HA, new effects can be obtained whereby a HA is selected that is suitable for the authentication means of the Home domain network 43, from the perspective of the roaming relationship.

it should be noted that when the authentication means of the other domain network receives a HA allocation request from the authentication means of the Home domain network 43 the authentication means may obtain, using a method of transmission to the MN 10 or another apparatus, a message for acquisition of information related to a HA selection condition, or may obtain necessary information from storage means where information related to a HA selection condition is held.

On the other hand, the authentication means of the other domain network, which has received a HA allocation request, requests a HA present on the same domain network for acquisition of information related to a HA selection condition, the HA that receives the request obtains information related to the HA selection condition, and the results are returned to the authentication means of the domain network that is requesting the HA allocation. It should be noted that a HA may be obtained using a method for transmitting a message to the MN 10 or another apparatus to obtain information related to the HA selection condition, or necessary information may be obtained from storage means wherein information related to a HA selection condition is held.

### <Second Embodiment>

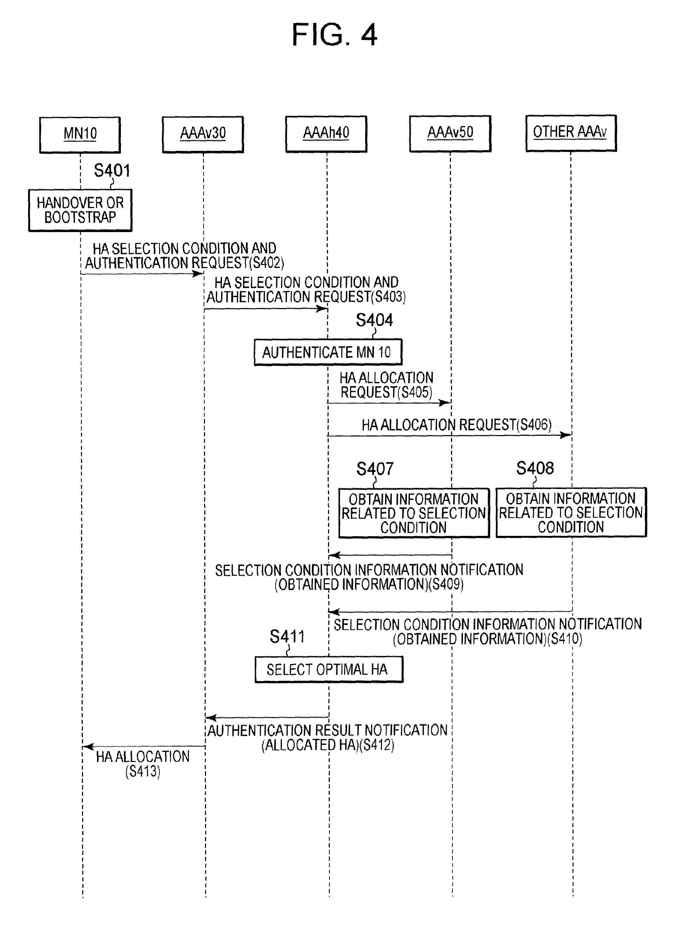

A second embodiment of the present invention will now be described. Fig. 4 is a sequence chart illustrating the primary processing performed in common for the embodiments of the present invention. It should be noted that the sequence chart shown in Fig. 4 illustrates only the primary processing related to the present invention.

The sequence chart in Fig. 4 is a diagram illustrating a message sequence beginning at the time whereat a MN 10 has performed a handover from an external domain network 23 to an external domain network 33 or has executed a bootstrap in the external domain network 33. It should be noted that the moving source and the moving destination of the MN 10 and the bootstrap location are not limited to these and, for example, a case wherein the MN 10 is moved from a domain network 43 to the external domain network 23 or a case wherein the MN 10 has executed the bootstrap in the external domain network 23 may be employed.

When the MN 10 has performed a handover from the external domain network 23 to the external domain network 33, or has executed a bootstrap in the external domain network 33 (S401), in addition to a message that requests authentication of the MN 10, MN 10 transmits to a AAAv server 30, through an authentication system, a HA selection condition to be used for securing a HA to be allocated (S402). Since the external domain network 33 is not the Home domain network 43 of the MN 10, the AAAv server 30 transfers an authentication request received from the MN 10 to a AAAh server 40 (S403).

The AAAh server 40 receives the authentication request from the AAAv server 30 and authenticates the MN 10 (S404), and transmits to a AAAv server 50, for which the lending or borrowing of a HA is permitted, and to other AAAv servers, a HA allocation request that additionally includes a HA selection condition presented by the MN 10 (S405 and S406).

Upon receiving the HA allocation request from the AAAh server 40, the AAAv server 50 and the other AAAv servers determine whether the function of a HA can be provided for the MN 10, and when it is available, information related to the provided HA selection condition is obtained (S407 and S408). The information obtained is transmitted, while included in a selection condition information notification message that is a reply message to the AAAh server 40 (S409 and S410). The AAAh server 40 compares the information obtained from the individual AAAv servers, selects a HA that provides the most suitable condition (S411), and transmits the results, included in an authentication result notification message, which is a reply message, transmitted to the AAAv server 30 (S412).

Upon receiving the authentication results and information for the allocated HA, the AAAv server 30 transmits these data to the MN 10 (S413). Thus, the optimal HA is allocated to the MN 10, based on the HA selection condition submitted by the MN 10.

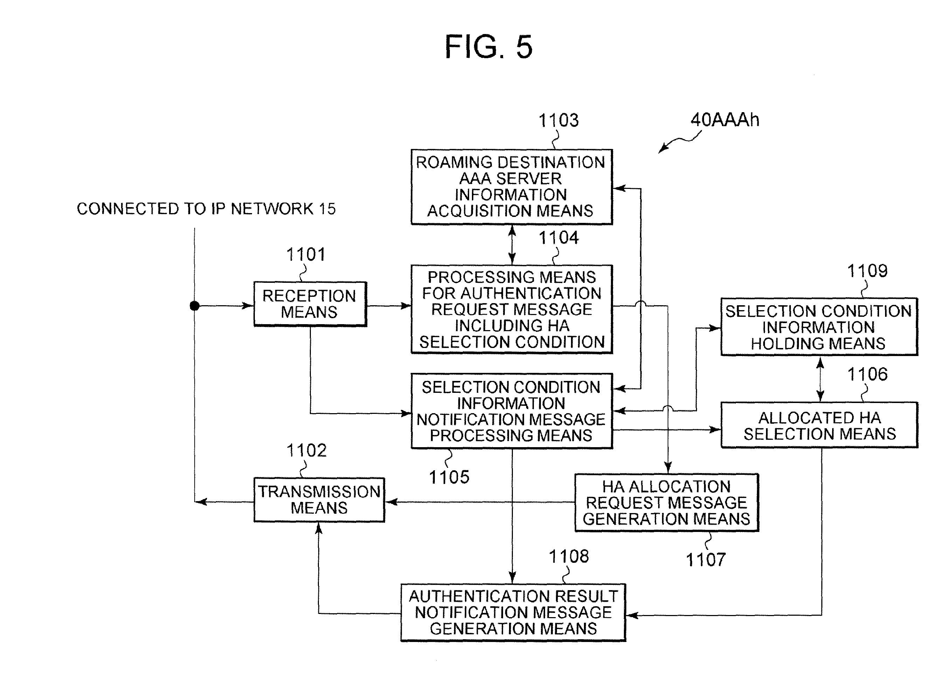

Further, Fig. 5 is a block diagram illustrating an example configuration for the AAAh server 40 for the second embodiment of the present invention. It should be noted that the individual functions included in the AAAh server 40 are shown by using blocks, and can be provided using hardware and/or software. The AAAh server 40 in Fig. 5 includes: reception means 1101; transmission means 1102; processing means 1104, for an authentication request message that includes a HA selection condition; roaming destination AAA server information acquisition means 1103; HA allocation request message generation means 1107; selection condition information notification message processing means 1105; allocated HA selection means 1106; authentication result notification message generation means 1108; and selection condition information holding means 1109.

The reception means 1101 and the transmission means 1102 are means that are connected to an IP network 15 to transmit and receive packets. It should be noted that generally an interface for a connection to a subordinate network that includes a HAv 31 differs from an interface for a connection to the IP network 15, and a plurality of reception means and transmission means are respectively provided for the interfaces. In this case, one reception means 1101 and one transmission means 1102 are illustrated, collectively.

Further, the processing means 1104, for an authentication request message that includes a HA selection condition, performs a process related to an authentication request message for the MN 10 that is transferred from the AAAv server 30; obtains a HA selection condition, presented by the MN 10, that is included in the message; requests of the roaming destination AAA server information acquisition means 1103 information concerning a AAAv server of which allocation of a HA is to be requested; and instructs the HA allocation request message generation means 1107 to generate an HA allocation request for transmission to the obtained AAAv server.

The roaming destination AAA server acquisition means 1103 obtains information for AAAs that have roaming contracts with the AAAh server 40, and returns the information obtained to the processing means 1104, for the authentication request message that includes a HA selection condition.

The HA allocation request message generation means 1107 is means for generating messages to be transmitted to roaming destinations, as instructed by the message processing means 1104, for the authentication request that includes the HA selection condition, and for instructing transmission of these messages to the transmission means 1102.

The selection condition information notification message processing means 1105 is means for performing a process related to a selection condition information notification message, which is a reply from an AAAv server to which an HA allocation request message was transmitted; for instructing the selection condition information holding means 1109 to hold the obtain HA selection condition information; and for confirming whether selection condition information notification messages have been received from all the AAAv servers to which the HA allocation request message was transmitted and, as a result, when reception from all the AAAv servers has been completed, issues an instruction to the allocated HA selection means 1106 to select a HA that is the most suitable for the condition.

The allocated HA selection means 1106 is means for receiving an instruction from the selection condition information notification message processing means 1105; for obtaining, from the selection condition information holding means 1109, the HA selection condition information that is obtained from the transmission destination of the HA allocation request message; and for employing these data to perform the optimal HA selection, while taking into consideration the HA selection condition.

The authentication result notification message generation means 1108 is means for generating a message to convey notification, together with authentication results, of an HA that has been selected by the allocation HA selection means, and for issuing an instruction to transmit this message to the transmission means 1102.

The selection condition information holding means 1109 is means for receiving an instruction from the selection condition information notification message processing means 1105, and for holding the HA selection condition information of which notified. Furthermore, the selection condition information holding means 1109 is also means for receiving, from the allocated HA selection means 1106, a request for the acquisition of HA selection condition information, and for, in turn, supplying the HA selection condition information that is requested.

Additionally, although not illustrated, it is assumed that the MN 10 includes means for adding, to an authentication request message, an HA selection condition to be employed for the selection of a HA.

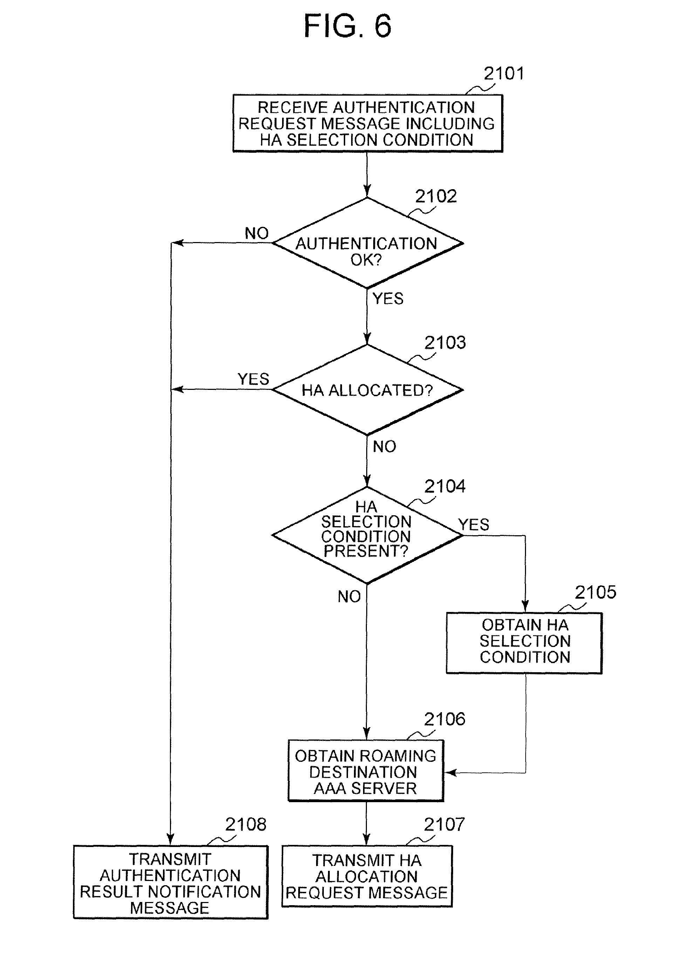

Fig. 6 is a flowchart illustrating the flow of the processing performed when the AAAh server 40 shown in Fig. 5 receives an authentication request message that includes a HA selection condition.

When the AAAh server 40 receives an authentication request message (2101), first, the AAAh server 40 performs an authentication for the MN 10 that issued the authentication request (2102). When the authentication fails, an authentication result notification message to that effect is transmitted (2108).

On the other hand, when the authentication is successful, a check is performed to determine whether a HA has been allocated by the AAAv server 30, which is a message transmission source (2103). When no HA has been allocated, it is determined that the allocation of a HA to the MN 10 is required, and a check is performed to determine whether a HA selection condition to be used for HA selection has been presented (2104). When the HA selection condition has been presented, this information is obtained (2105), roaming destination AAA server information is obtained (2106), and a HA allocation request message is transmitted to a AAA server (e.g., the AAAv server 50 or the other AAAv server) included in the information obtained (2107) to request the allocation of a HA and to request the acquisition of information related to a HA selection condition.

It should be noted that when the existence of an allocated HA is indicated in the authentication request message, the AAAh server 40 transmits only the authentication results to the AAAv server 30 (2108).

It should be noted that the number of hops, the status of a QoS path or the cost, for example, can be employed as a HA selection condition.

Further, the AAAv server 50 and the other AAAv server, which have received the HA allocation requests from the AAAh server 40, may employ a method for transmitting messages to the MN 10 or another apparatus, and may obtain information related to a HA selection condition, or may obtain necessary information, from storage means wherein information related to a HA selection condition is stored.

On the other hand, when the individual AAAv servers receive the HA allocation request, the AAAv servers transmit requests to HAs present within their domain networks to acquire information related to the HA selection condition, and upon receiving the requests, the HAs obtain information related to the HA selection condition and, in return, forward the results to the AAAv servers. It should be noted that a HA may employ a method for transmitting a message to the MN 10, or another apparatus, to obtain information related to the HA selection condition, or may obtain necessary information from storage means wherein information related to the HA selection condition is stored.

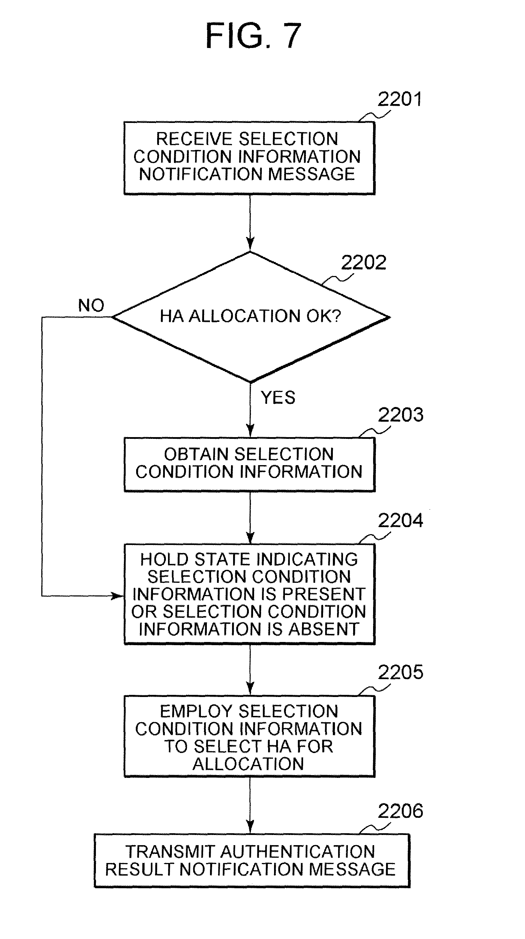

Fig. 7 is a flowchart illustrating the flow of the processing performed when the AAAh server 40 in Fig. 5 receives a selection condition information notification message. When the AAAh server 40 receives a selection condition information notification message (2201), first, the AAAh server 40 determines whether the AAAv server 30, which is the transmission source for this message, permits the allocation of a HA (2202).

When the external domain network at the transmission source permits the allocation of a HA, information that is included in the message and is related to a HA selection condition is obtained (2203) and is stored (2204). On the other hand, when the allocation of a HA is not permitted, HA selection condition information can not be obtained, and information is stored that indicates there is no HA selection condition information (2204).

And when the AAAh server 40 receives selection condition information notification messages from all the AAAv servers to which the HA allocation request messages were transmitted, the AAAh server 40 selects the optimal HA based on the information obtained that is related to the HA selection condition (2205), and transmits the results as an authentication result notification message (2206) .

Since by employing this arrangement a HA is allocated to the MN 10 based on the HA selection condition presented by the MN 10, the effect obtained is that a data packet dispatched by the MN 10, or a data packet dispatched by a communication side to the home address of the MN 10, is transmitted through the HA along the optimal path.

### <Third Embodiment>

A third embodiment of the present invention will now be described. A difference in the operation of the third embodiment of this invention from the operation described above, while referring to the sequence chart in Fig. 4, is that a AAAh server 40 determines a HA selection condition and transmits the HA selection condition, together with a HA allocation request, to a AAAv server 50, for which the lending or borrowing of a HA is permitted, and to the other AAAv server.

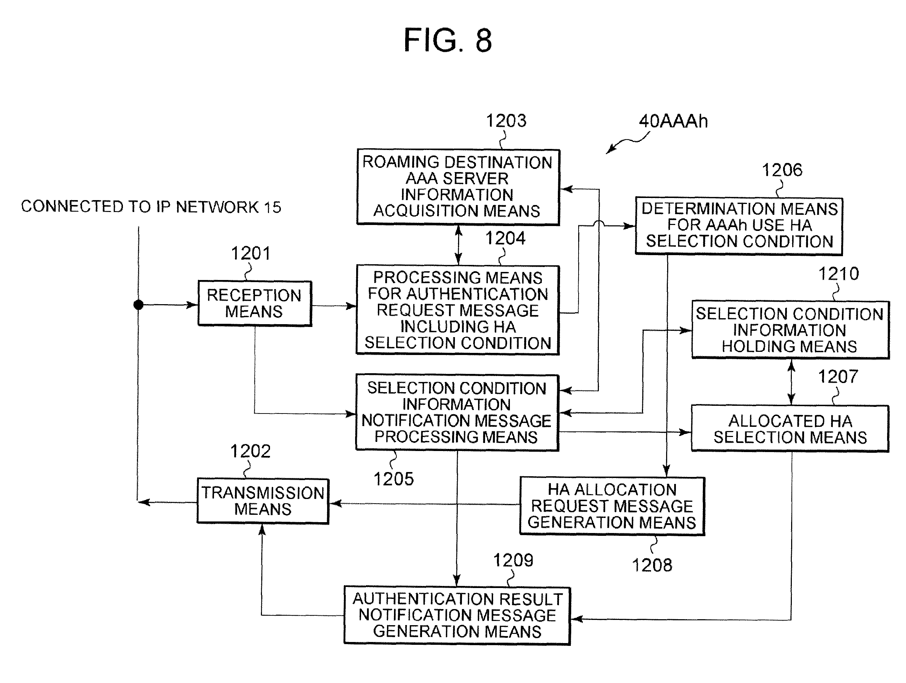

Additionally, Fig. 8 is a block diagram illustrating an example configuration for the AAAh server 40 of the third embodiment of the present invention. It should be noted that in Fig. 8 the individual functions included in the AAAh server 40 are illustrated by using blocks, and can be provided by hardware and/or software.

The AAAh server 40 in Fig. 8 includes: reception means 1201; transmission means 1202; processing means 1204, for an authentication request that includes a HA selection condition; roaming destination AAA server information acquisition means 1203; determination means 1206, for a AAAh use HA selection condition; HA allocation request message generation means 1208; selection condition information notification message processing means 1205; allocated HA selection means 1207; authentication result notification message generation means 1209; and selection condition information holding means 1210.

It should be noted that the reception means 1201, the transmission means 1202, the processing means 1204, for an authentication request message that includes a HA selection condition, the roaming destination AAA server information acquisition means 1203, the HA allocation request message generation means 1208, the selection condition information notification message processing means 1205, the authentication result notification message generation means 1209 and the selection condition information holding means 1210 are the same as the reception means 1101, the transmission means 1102, the processing means 1104, for an authentication request message that includes a HA selection condition, the roaming destination AAA server information acquisition means 1103, the HA allocation request message generation means 1107, the selection condition information notification message processing means 1105, the authentication result notification message generation means 1108 and the selection condition information holding means 1109 in Fig. 5.

The determination means 1206 for a AAAh use HA selection condition is means for determining a HA selection condition that the AAAh server 40 desires to consider as a HA selection condition to be used for selection of a HA, in addition to a HA selection condition presented by the MN 10. The HA selection condition that is determined is included, together with the HA selection condition presented by the MN 10, in a HA allocation request message and is transmitted.

The allocated HA selection means 1207 is means for receiving an instruction from the selection condition information notification message processing means 1205; and for obtaining, from the selection condition information holding means 1210, HA selection condition information indicating the transmission destination of a HA allocation request message; and based on these data, for selecting the optimal HA, while taking into consideration both the HA selection condition presented by the MN 10 and the HA selection condition presented by the AAAh server 40.

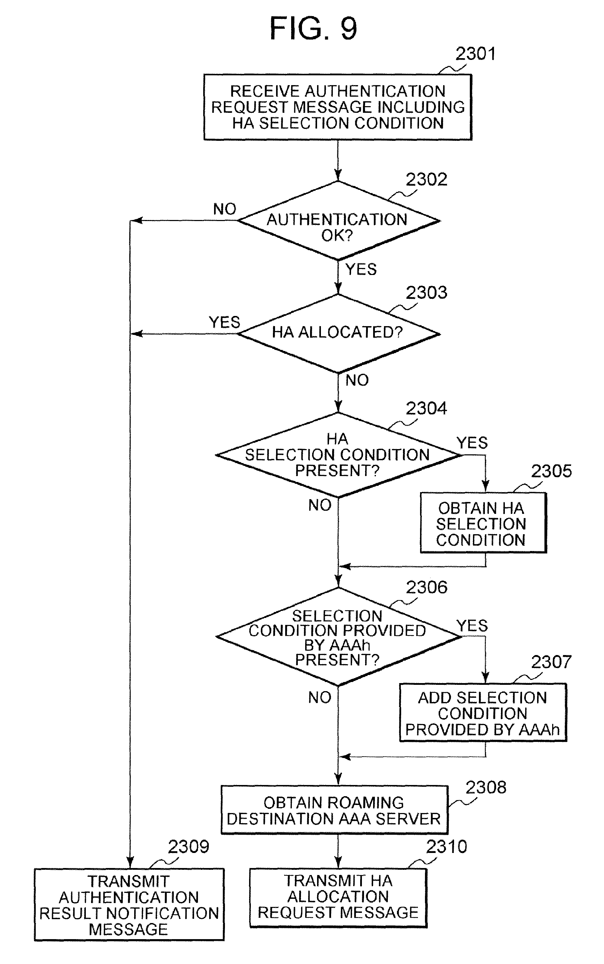

Fig. 9 is a flowchart illustrating the flow of the processing performed when the AAAh server 40 in Fig. 8 receives an authentication request message that includes a HA selection condition. A difference from the processing in Fig. 6 performed by the AAAh server 40 in Fig. 5 is that the processes (2306 and 2307) for obtaining the HA selection condition presented by the AAAh server 40 are included after the HA selection condition presented by the MN 10 has been obtained.

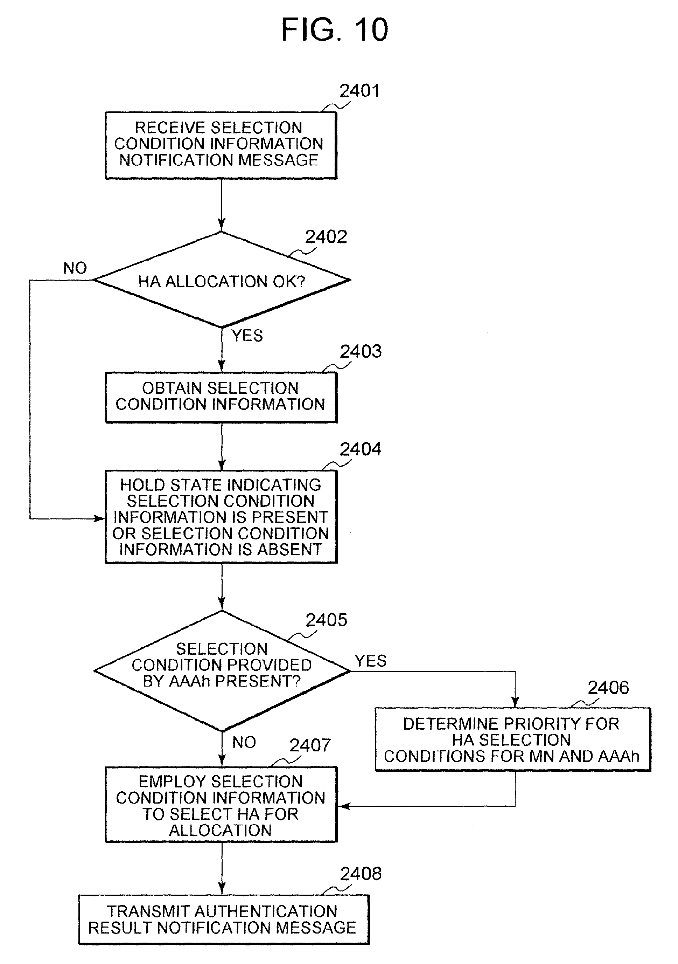

Fig. 10 is a flowchart illustrating the flow of the processing performed when the AAAh server 40 in Fig. 8 receives a selection condition information notification message. When the AAAh server 40 receives a selection condition information notification message (2401), first, the AAAh server 40 determines whether the transmission source domain of this message permits the allocation of a HA (2402).

When the transmission source domain permits the allocation of a HA, the measurement results for a HA selection condition that is included in the message are obtained (2403) and are stored (2404). On the other hand, when the allocation of a HA is not permitted, HA selection condition information can not be obtained, and information is stored that indicates there is no HA selection condition information (2404). And when the AAAh server 40 receives selection condition information notification messages from all the AAAv servers to which the HA allocation request messages were transmitted, the AAAh server 40 obtains the HA selection condition information presented by the AAAh server 40 (2405), compares the HA selection condition presented by the MN 10 with the HA selection condition presented by the AAAh server 40, and determines which HA selection condition should be preferential (2406).

Then, the AAAh server 40 selects the optimal HA based on the HA selection condition information (and further, by taking into consideration the priority of the HA selection condition) (2407), and transmits the results as an authentication result notification message (2408).

It should be noted that the number of hops, the status of a QoS path or the cost, for example, can be employed as a HA selection condition.

Since by employing this arrangement a HA is allocated to the MN 10 based on the HA selection condition presented by the MN 10 and the HA selection condition presented by the AAAh server 40, effects are obtained such that a data packet dispatched by the MN 10 or a data packet dispatched by a communication side to the home address of the MN 10 is transmitted through the HA along the optimal path. Furthermore, since a condition presented by the AAAh server 40 is included, new effects can be obtained such that a HA that meets a requirement that the AAAh server 40 regards as a HA selection condition can be allocated.

### <Fourth Embodiment>

A fourth embodiment of the present invention will now be described. A difference in the operation of the fourth embodiment of the invention from the operation described above, while referring to the sequence chart in Fig. 4, is that not only information related to a HA selection condition, but also roaming information held by the AAAh server 40 is employed for the selection of a HA.

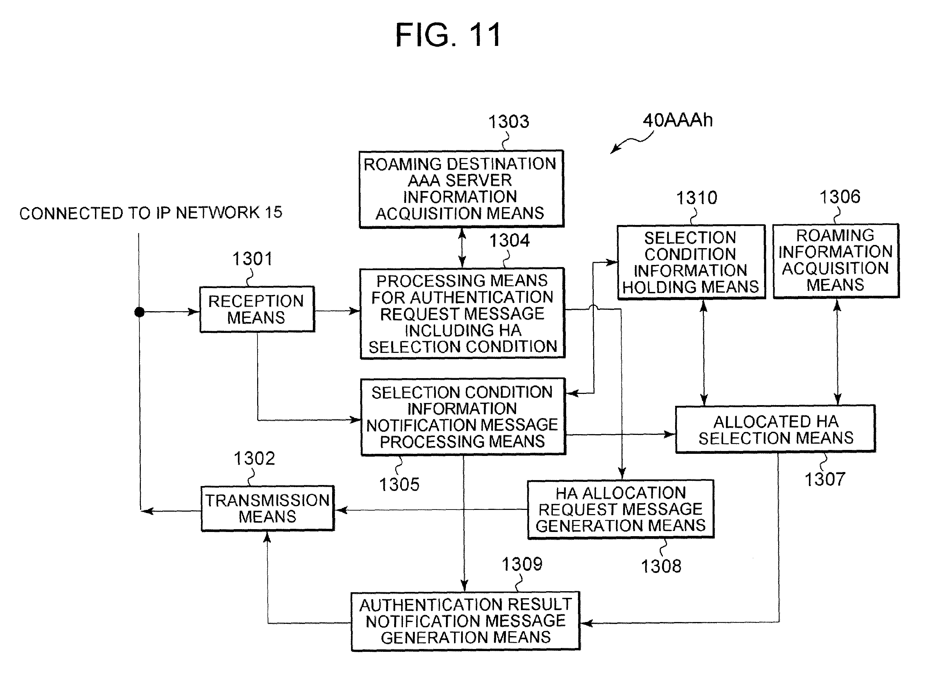

Further, Fig. 11 is a block diagram illustrating an example configuration for the AAAh server 40 of the fourth embodiment of the present invention. It should be noted that in Fig. 11 the individual functions included in the AAAh server 40 are illustrated by using blocks, and can be provided by hardware and/or software.

The AAAh server 40 in Fig. 11 includes: reception means 1301; transmission means 1302; roaming destination AAA server information acquisition means 1303; processing means 1304, for an authentication request message that includes a HA selection condition; HA allocation request message generation means 1308; roaming information acquisition means 1306; selection condition information notification message processing means 1305; allocated HA selection means 1307; authentication result notification message generation means 1309; and selection condition information holding means 1310. It should be noted that the reception means 1301, the transmission means 1302, the roaming destination AAA server information acquisition means 1303, the processing means 1304, for an authentication request message that includes a HA selection condition, the HA allocation request message generation means 1308, the selection condition information notification message processing means 1305, the authentication result notification message generation means 1309 and the selection condition information holding means 1310 are the same as the reception means 1101, the transmission means 1102, the processing means 1104, for an authentication request message that includes a HA selection condition, the roaming destination AAA server information acquisition means 1103, the HA allocation request message generation means 1107, the selection condition information notification message processing means 1105, the authentication result notification message generation means 1108 and the selection condition information holding means 1109 in Fig. 5.

The roaming information acquisition means 1306 is means that receives an instruction from the allocated HA selection means 1307, and from among roaming information relative to the individual AAAv servers that is held in the AAAh server 40, extracts a condition to be used for selection of a HA. Since this means is included, the optimal HA can be selected not only by employing the HA selection condition information presented by the MN 10, but also by taking into account a condition established on the roaming contract, etc.

The allocated HA selection means 1307 is means that, upon receiving an instruction from the selection condition information notification message processing means 1305, selects a HA, while taking into account the roaming information that is obtained from the roaming information acquisition means 1306 so as to be used for HA selection, and information that is obtained by the selection condition information holding means 1310 and is related to the HA selection conditions transmitted by the individual AAAv servers. It should be noted that a difference from the allocated HA selection means 1106 shown in Fig. 5 is that not only the HA selection condition information, but also the roaming information is employed for selection of a HA, and the other functions are the same as those of the allocated HA selection means 1106 in Fig. 5.

Since the flow of the processing performed for the fourth embodiment of the present invention upon receiving an authentication request message is the same as the operation illustrated in Fig. 6, no explanation for it will be given.

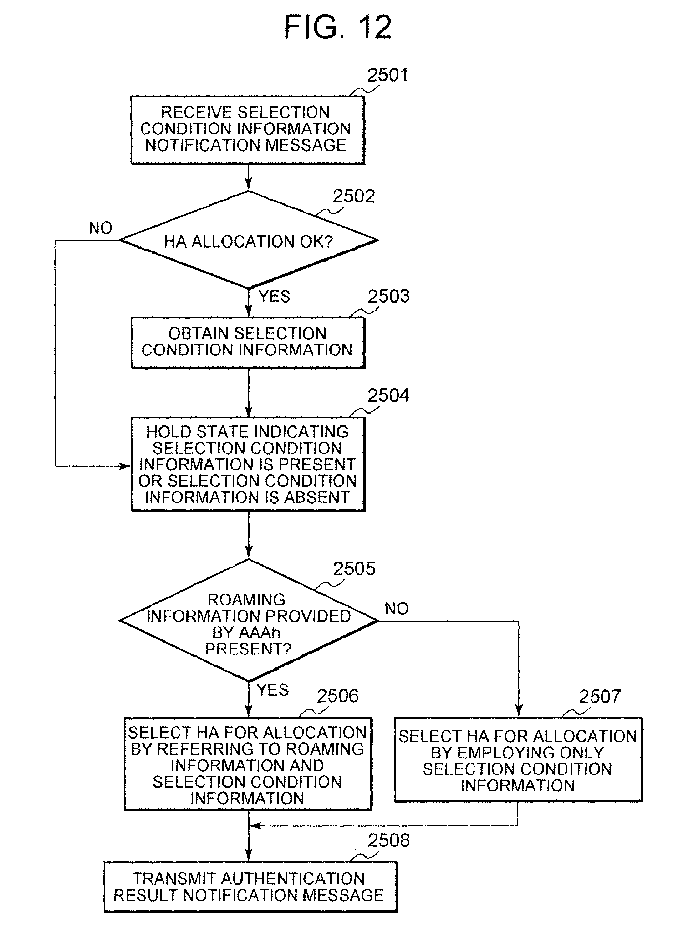

Fig. 12 is a flowchart illustrating the flow of the processing performed when the AAAh server 40 receives a selection condition information notification message. When the AAAh server 40 receives a selection condition information notification message (2501), first, the AAAh server 40 determines whether the transmission source domain of this message permits the allocation of a HA (2502).

When the transmission source domain permits the allocation of a HA, the information related to a HA selection condition included in the message is obtained (2503) and is stored (2504). On the other hand, when the allocation of a HA is not permitted, HA selection condition information can not be obtained, and information is stored that indicates there is no HA selection condition information (2504).

And when the AAAh server 40 receives selection condition information notification messages from all the AAAv servers to which the HA allocation request messages were transmitted, the AAAh server 40 determines whether a condition required for a roaming relationship to be used for the selection of a HA is present (2505). When a condition required for a roaming relationship to be used for the selection of a HA is present, the optimal HA is selected by employing both this information and the HA selection condition information that is obtained from the AAAv server 50 or the other AAAv server (2506). When a condition required for a roaming relationship is not present, the optimal HA is selected by using only the HA selection condition information (2507). Further, the results that are obtained are transmitted as an authentication result notification message (2508).

Since, by employing this arrangement, a HA is allocated to the MN 10 based on the HA selection condition presented by the MN 10, effects are obtained such that a data packet dispatched by the MN 10, or a data packet dispatched by a communication side to the home address of the MN 10, is transmitted through the HA along the optimal path. Furthermore, since roaming information held by the AAAh server 40 is taken into account for the selection of a HA, new effects can be obtained, such that, from the viewpoint of the roaming relationship, a HA that is suitable for the AAAh server 40 can be selected.

It should be noted that the number of hops, the status of a QoS path or the cost, for example, can be employed as a HA selection condition.

Further, the AAAv server 50 and the other AAAv server, which have received the HA allocation requests from the AAAh server 40, may employ a method for transmitting messages to the MN 10 or to another apparatus, and obtain information related to a HA selection condition, or may obtain necessary information from storage means wherein information related to a HA selection condition is stored.

On the other hand, when the individual AAAv servers receive the HA allocation requests, the AAAv servers transmit requests to HAs present within their domain networks in order to acquire information related to the HA selection condition, and upon receiving the requests, the HAs obtain information related to the HA selection condition and return the results to the AAAv servers. It should be noted that a HA may employ a method for transmitting a message to the MN 10 or another apparatus, and may obtain information related to the HA selection condition, or may obtain necessary information from storage means wherein information related to the HA selection condition is stored.

### <Fifth Embodiment>

A fifth embodiment of the present invention will now be described. Differences in the operation of the fifth embodiment of the present invention from the operation described above, while referring to the sequence chart in Fig. 4, are that: a AAAh server 40 determines a HA selection condition and transmits the HA selection condition, together with a HA allocation request, to a AAAv server 50, for which the lending or borrowing of a HA is permitted, and to the other AAAv server; and a HA is selected by employing not only information related to a HA selection condition, but also roaming information held by the AAAh server 40.

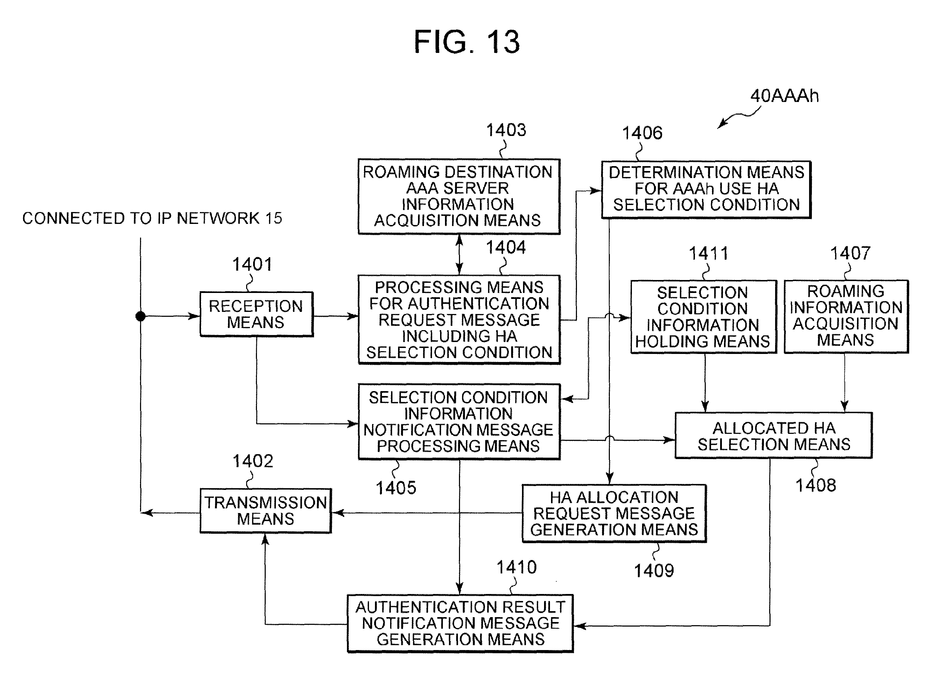

In addition, Fig. 13 is a block diagram illustrating an example configuration for the AAAh server 40 of the fifth embodiment of the present invention. It should be noted that in Fig. 13 the individual functions included in the AAAh server 40 are illustrated by using blocks, and can be provided by hardware and/or software.

The AAAh server 40 in Fig. 13 includes: reception means 1401; transmission means 1402; processing means 1404, for an authentication request message that includes a HA selection condition; roaming destination AAA server information acquisition means 1403; determination means 1406, for a AAAh use HA selection condition; HA allocation request message generation means 1409; roaming information acquisition means 1407; selection condition information notification message processing means 1405; allocated HA selection means 1408; authentication result notification message generation means 1410; and selection condition information holding means 1411.

It should be noted that the reception means 1401, the transmission means 1402, the roaming destination AAA server information acquisition means 1403, the HA-processing means 1404, for an authentication request message that includes a HA selection condition, the HA allocation request message generation means 1409, the selection condition information notification message processing means 1405, the authentication result notification message generation means 1410 and the selection condition information holding means 1411 are the same as the reception means 1101, the transmission means 1102, the roaming destination AAA server information acquisition means 1103, the processing means 1104, for an authentication request message that includes a HA selection condition, the HA allocation request message generation means 1107, the selection condition information measurement result notification message processing means 1105, the authentication result notification message generation means 1108 and the selection condition information holding means 1109 in Fig. 5. Further, the determination means 1406 for a AAAh use HA selection condition is the same as the determination means for a AAAh use HA selection condition in Fig. 8, and the roaming information acquisition means 1407 is the same as the roaming information acquisition means 1306 in Fig. 11.

The allocated HA selection means 1408 is means for selecting a HA, while taking into consideration the roaming information that is received from the roaming information acquisition means 1407 and is to be used for HA selection, and information that is received from the selection condition information notification message processing means 1405 and is related to HA selection conditions transmitted by the individual AAAv servers.

Since the flow of the processing for the fifth embodiment of the invention performed upon receiving an authentication request message that includes a HA selection condition is the same as the operation shown in Fig. 9, no explanation for it will be given.

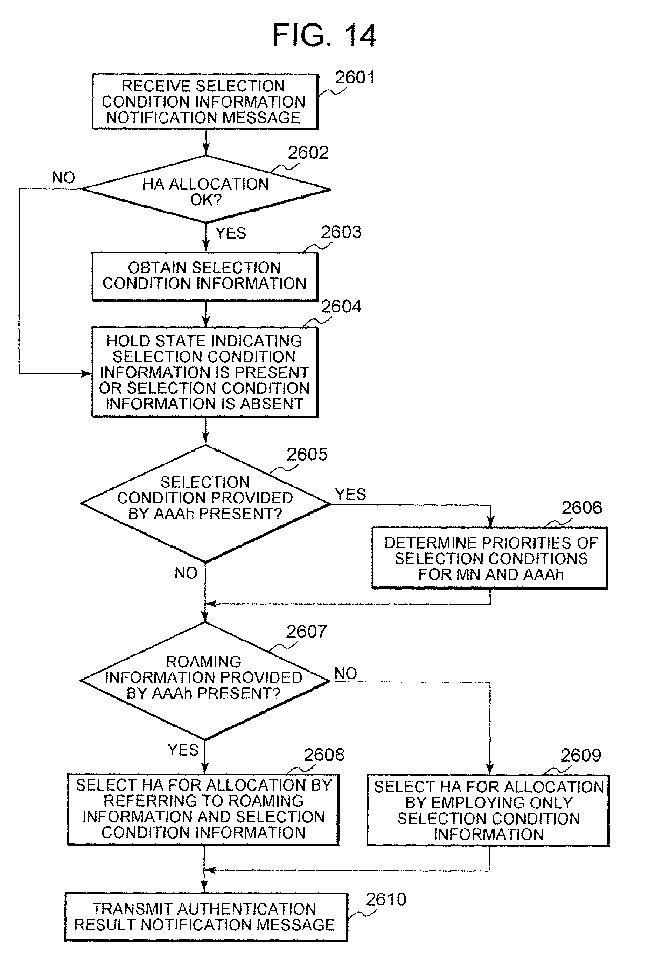

Further, Fig. 14 is a flowchart illustrating the flow of the processing performed when the AAAh server 40 receives a selection condition information notification message. When the AAAh server 40 receives a selection condition information notification message (2601), first, the AAAh server 40 determines whether the domain network at the transmission source of the message permits the allocation of a HA (2602). When the transmission source domain permits the allocation of a HA, the measurement results for the HA selection condition that is included in the message are obtained (2603) and this information is stored (2604). On the other hand, when the allocation of a HA is not allowed, HA selection condition information can not be obtained, and information is stored that indicates there is no HA selection condition information (2604).

And when the AAAh server 40 receives selection condition information notification messages from all the AAAv servers to which HA allocation request messages were transmitted, the HA selection condition information presented by the AAAh server 40 is obtained (2605). Then, the HA selection condition presented by the MN 10 is compared with the HA selection condition presented by the AAAh server 40 and which HA selection condition should be preferential is determined (2606).

Furthermore, a check is performed to determine whether a condition required for a roaming relationship to be used for the selection of a HA is present (2607). When a condition required for a roaming relationship to be used for the selection of a HA is present, the optimal HA is selected by employing both this information and the HA selection condition information obtained from the AAAv server 50 and the other AAAv server (2608). When a condition required for the roaming relationship is not present, the optimal HA is selected by using only the HA selection condition information (2609). Further, the obtained results are transmitted as an authentication result notification message (2610).

It should be noted that the number of hops, the status of a QoS path or the cost, for example, can be employed as a HA selection condition.

Since, by employing this arrangement, a HA is allocated to the MN 10 based on both the HA selection condition presented by the MN 10 and the HA selection condition presented by the AAAh server 40, effects are obtained such that a data packet dispatched by the MN 10, or a data packet dispatched by a communication side to the home address of the MN 10, is transmitted through the HA along the optimal path. Furthermore, since the HA selection condition presented by the AAAh server 40 and roaming information held by the AAAh server 40 are taken into account for the selection of a HA, new effects can be obtained such that a HA suitable for a HA selection condition desired by the AAAh server 40 can be selected, and that, from the viewpoint of the roaming relationship, a HA that is suitable for the AAAh server 40 can be selected.

### <Sixth Embodiment>

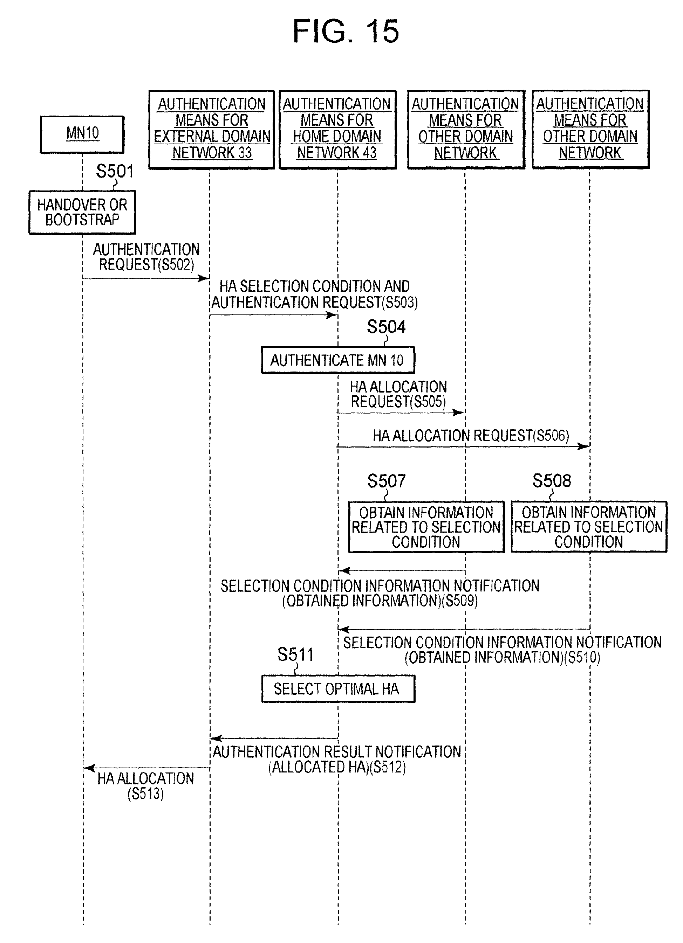

A sixth embodiment of the present invention will now be described. Fig. 15 is a sequence chart illustrating the primary processing for the sixth embodiment of the present invention. It should be noted that the sequence chart in Fig. 15 is an illustration of only the primary processing related to the present invention.

The sequence chart in Fig. 15 is a diagram showing a message sequence for a case wherein a MN 10 has performed a handover from a Home domain network 43 to an external domain network 23, or has executed a bootstrap in the external domain network 23, or a case wherein the MN 10 has performed a handover from the external domain network 23 to an external domain network 33, or has executed a bootstrap in the external domain network 33.

Since the processing performed at the time of a handover between the Home domain network 43 and the external domain network 23, or at the time of the execution of a bootstrap in the external domain network 23 is substantially the same as the primary processing performed by the present invention at the time of a handover between the external domain network 23 and the external domain network 33, or at the time of the execution of a bootstrap in the external domain network 33, for the sixth embodiment of the present invention, an explanation will be given for the second case wherein the handover has been performed from the external domain network 23 to the external domain network 33, or the bootstrap has been executed in the external domain network 33.

When the MN 10 has performed a handover from the external domain network 23 to the external domain network 33, or has executed a bootstrap in the external domain network 33 (S501), the MN 10 transmits a message to the authentication means of the external domain network 33 to request authentication of the MN 10 (S502). Since the external domain network 33 is not the Home domain network 43 of the MN 10, the authentication means of the external domain network 33 adds a HA selection condition to the authentication request, and transfers the request to the authentication means of the Home domain network 43 of the MN 10 (S503), where authentication for the MN 10 is performed (S504).

When authentication is completed, a request message is transmitted to the authentication means of the other domain network in order to obtain information that is to be used for the selection of a HA to be allocated to the MN 10, and that is related to HA selection conditions the authentication means of the external domain network 33 and the authentication means of the Home domain network 43 desire to consider (S505 and S506). When the authentication means of the other domain network receives a HA allocation request from the authentication means of the Home domain network 43, the authentication means obtains information related to the HA selection condition that is transmitted (S507 and S508), and transmits this information as a selection condition information notification message to the authentication means of the Home domain network 43 (S509 and S510).

The authentication means of the Home domain network 43 selects the optimal HA based on the HA selection condition information obtained from the other domain network (S511), and transmits an authentication result notification message to the authentication means of the external domain network 33 in order to allocate the selected HA for the MN 10 (S512). Further, the authentication means of the domain network 33 transmits to the MN 10 a message that includes the allocated HA information (S513).

For the selection of a HA, not only the HA selection condition information, but also roaming information relative to the other domain network that is held in the Home domain may be taken into account.

Since by employing this arrangement a HA is allocated for the MN 10 based on the HA selection conditions presented by both the authentication means of the external domain network 33 and the Home domain network 43 and the roaming information, effects are obtained such that a data packet dispatched by the MN 10, or a data packet dispatched by a communication side to the home address of the MN 10, is transmitted through the HA along the optimal path, and that, from the viewpoint of the roaming relationship, a HA suitable to the authentication means of the Home domain network 43 can be selected.

It should be noted that the authentication means of the other domain network, which has received the HA allocation request from the authentication means of the Home domain network 43, may employ a method for transmitting a message to the MN 10 or to another apparatus, and may obtain information related to a HA selection condition, or may obtain necessary information from storage means wherein information related to a HA selection condition is stored.

On the other hand, when the authentication means of the domain network receives the HA allocation request, the authentication means transmits a request to a HA present within its domain network to acquire information related to the HA selection condition, and upon receiving the request, the HA obtains information related to the HA selection condition and supplies the results to the authentication means of the domain network that transmitted the HA allocation request. It should be noted that a HA may employ a method for transmitting a message to the MN 10, or another apparatus, to obtain information related to the HA selection condition, or may obtain necessary information from storage means wherein information related to the HA selection condition is stored.

It should be noted that the number of hops, the status of a QoS path or the cost, for example, can be employed as a HA selection condition.

It should be noted that a AAA server or a AAAProxy server is employed as the authentication means for each domain network.

### <Seventh Embodiment>

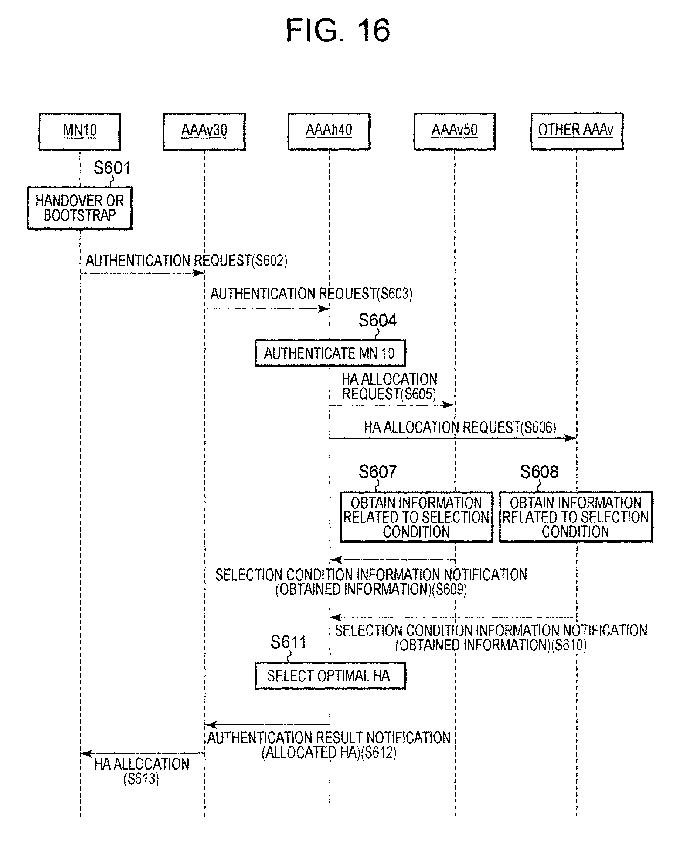

A seventh embodiment of the present invention will now be described. Fig. 16 is a sequence chart illustrating the primary processing performed in common for the embodiments of the present invention. It should be noted that the sequence chart shown in Fig. 16 is an illustration only of the primary processing related to the present invention.

The sequence chart in Fig. 16 is a diagram illustrating a message sequence beginning at the time at which a MN 10 has performed a handover from an external domain network 23 to an external domain network 33, or has executed a bootstrap. It should be noted that the moving source and the moving destination of the MN 10 are not limited to these, and a case wherein the MN 10 is moved from a domain network 43 to the external domain network 23 may be employed.

When the MN 10 is connected to the external domain network 33 (S601), the MN 10 transmits a message to a AAAv server 30, through an authentication system, to request authentication for the MN 10 (S602). Since the external domain network 33 is not the Home domain or network 43 of the MN 10, the AAAv server 30 transfers the authentication request received from the MN 10 to a AAAh server 40 (S603).

The AAAh server 40 receives the authentication request transferred by the AAAv server 30, and authenticates the MN 10 (S604). Thereafter, the AAAh server 40 decides on a HA selection condition to be presented by the AAAh server 40, and in order to search for a HA to be allocated for the MN 10, transmits to a AAAv server 50, for which the lending or borrowing of a HA is permitted, and to the other AAAv server a HA allocation request to which the HA selection condition, decided on by the AAAh server 40, is added (S605 and S606).

Upon receiving the HA allocation request from the AAAh server 40, the AAAv server 50 and the other AAAv server determine whether the function of a HA can be provided, and if it is available, obtain information related to the HA selection condition that is presented (S607 and S608). The obtained information is included in a reply message to the AAAh server 40 and is transmitted (S609 and S610). The AAAh server 40 compares the information obtained from the individual AAAv servers, selects the HA providing the most favorable condition (S611), and transmits a reply to the AAAv server 30 that includes the results (S612). The AAAv server 30 receives the authentication results and the information for the allocated HA, and transmits these data to the MN 10 (S613). Therefore, the optimal HA is allocated for the MN 10 based on the HA selection condition requested by the MN 10.

Further, the AAAv server 50 and the other AAAv server, which have received the HA allocation requests from the AAAh server 40, may employ a method for transmitting messages to the MN 10 or another apparatus, and obtain information related to a HA selection condition, or may obtain necessary information from storage means wherein information related to a HA selection condition is stored.

On the other hand, when the individual AAAv servers receive the HA allocation requests, the AAAv servers may transmit requests to HAs present within their domain networks to acquire information related to the HA selection condition, and upon receiving the requests, the HAs obtain information related to the HA selection condition and supply the results to the AAAv servers.

It should be noted that upon receiving a request for information related to a HA selection condition a HA may employ a method for transmitting a message to the MN 10, or to another apparatus, to obtain information related to the HA selection condition, or may obtain necessary information from storage means wherein information related to the HA selection condition is stored.

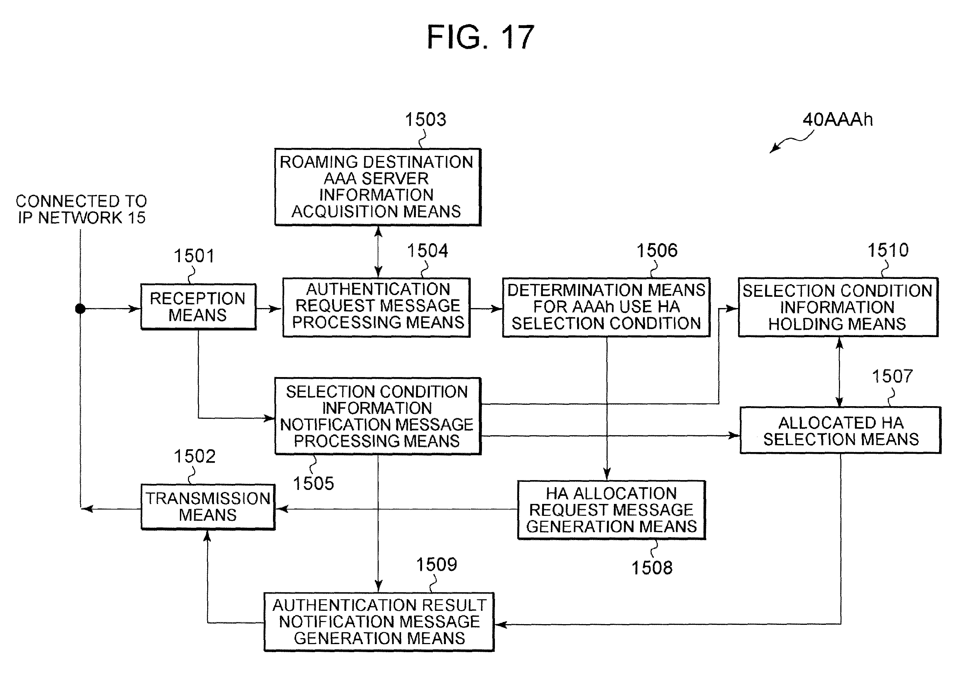

In addition, Fig. 17 is a block diagram illustrating an example configuration for the AAAh server 40 of the seventh embodiment of the present invention. It should be noted that in Fig. 17 the individual functions included in the AAAh server 40 are shown by using blocks, and can be provided by hardware and/or software.

The AAAh server 40 in Fig. 17 includes: reception means 1501; transmission means 1502; authentication request processing means 1504; roaming destination AAA server information acquisition means 1503; determination means 1506, for a AAAh use HA selection condition; HA allocation request message generation means 1508; selection condition information notification message processing means 1505; allocated HA selection means 1507; authentication result notification message generation means 1509; and selection condition information holding means 1510. It can be said that the AAAh server 40 shown in Fig. 17 is provided by replacing, with the authentication request message processing means 1504, the processing means 1204, for an authentication request message that includes a HA selection condition, of the AAAh server 40 in Fig. 8.

The authentication request message processing means 1504 is means for processing an authentication request message issued by the MN 10. Therefore, a difference from the processing means for an authentication request message that includes a HA selection condition, explained in the first to the sixth embodiments, is that the HA selection condition presented by the MN 10 is not processed.

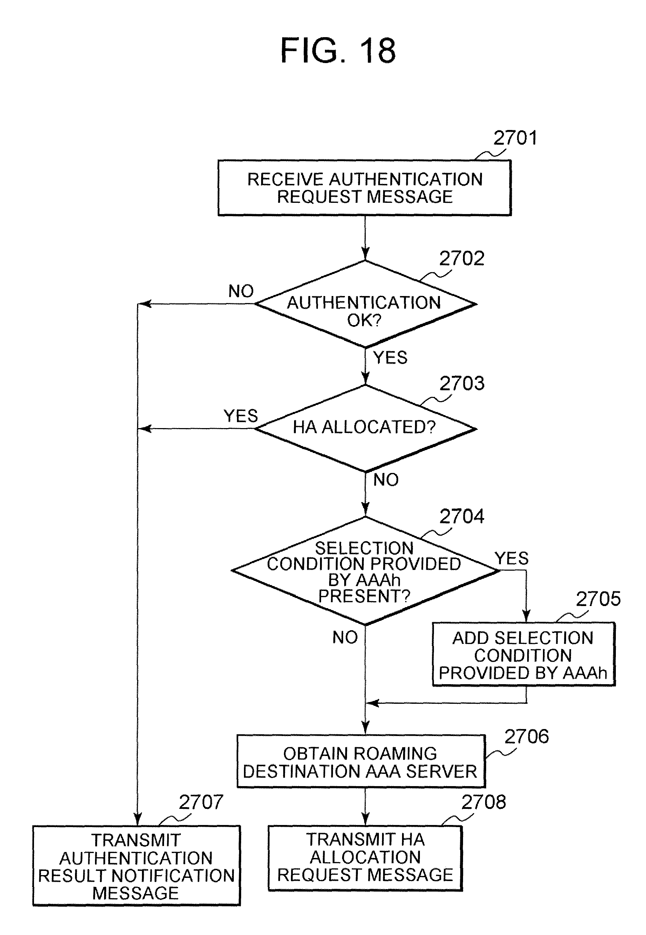

Fig. 18 is a flowchart showing the flow of the processing performed when the AAAh server 40 in Fig. 17 receives an authentication request message. When the AAAh server 40 receives an authentication request message (2701), first, the AAAh server 40 performs the authentication for the MN 10 that is requesting the authentication (2702). When the authentication fails, an authentication result notification message to that effect is transmitted (2707). On the other hand, when the authentication is successful, a check is performed to determine whether a HA has been allocated by the AAAv server 30 that is the transmission source of this message (2703). When a HA has not been allocated, it is determined that the allocation of a HA for the MN 10 is required, and a check is performed to determine whether a HA selection condition, used for HA selection, has been provided by the AAAh server 40 (2704).

When a HA selection condition has been provided by the AAAh server 40, this information is obtained (2705) and information about AAA servers (e.g., the AAAv server 50 and the other AAAv server) for which the lending or borrowing of a HA is permitted is obtained (2706), and HA allocation request messages are transmitted to these AAAv servers to request a HA allocation and information related to a HA selection condition (2708). It should be noted that in a case wherein the presence of an allocated HA is indicated in the authentication request message, the AAAh server 40 transmits only the authentication results to the AAAv server 30 (2707).

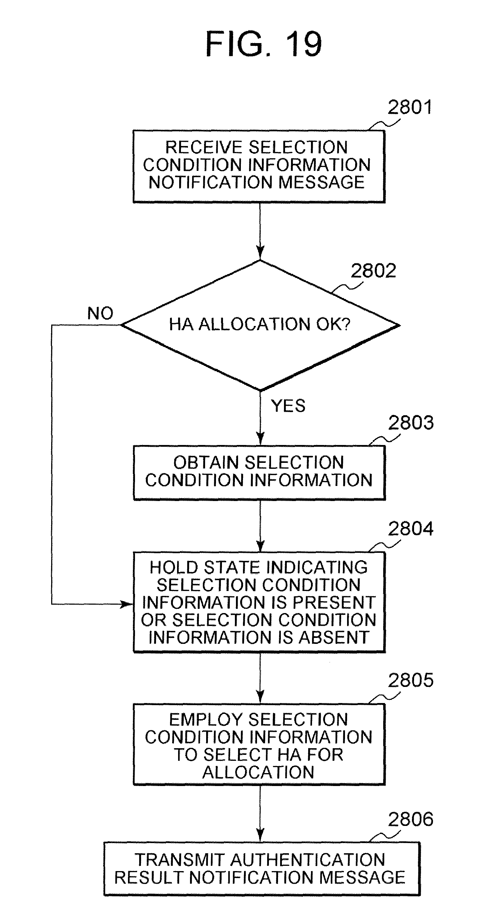

Fig. 19 is a flowchart showing the flow of the processing performed when the AAAh server 40 in Fig. 17 receives a selection condition information notification message. When the AAAh server 40 receives a selection condition information notification message (2801), first, the AAAh server 40 determines whether the domain network at the transmission source for the message permits the allocation of a HA (2802). When the domain network at the transmission source permits the allocation of a HA, information that is included in the message and is related to a HA selection condition is obtained (2803) and is stored (2804). On the other hand, when the allocation of a HA is not permitted, HA selection condition information can not be obtained, and information is stored that indicates there is no HA selection condition information (2804).

And when the AAAh server 40 receives a selection condition information notification message from all the AAAv servers to which the HA allocation request messages were transmitted, the AAAh server 40 selects the optimal HA by referring to the obtained HA selection condition information (2805), and transmits the results as an authentication result notification message (2806).

Since, by employing this arrangement, a HA is allocated for the MN 10 based on the HA selection condition provided by the AAAh server 40, effects are obtained such that a data packet dispatched by the MN 10, or a data packet dispatched by a communication side to the home address of the MN 10, is transmitted through the HA along the optimal path.

It should be noted that the number of hops, the status of a QoS path or the cost, for example, can be employed as a HA selection condition.

Further, the AAAv server 50 and the other AAAv server, which have received the HA allocation requests from the AAAh server 40, may employ a method for transmitting messages to the MN 10 or another apparatus, and obtain information related to a HA selection condition, or may obtain necessary information from storage means wherein information related to a HA selection condition is stored.

On the other hand, when the individual AAAv servers receive the HA allocation requests, the AAAv servers transmit requests to HAs present in their domain networks to acquire information related to the HA selection condition, and upon receiving the requests, the HAs obtain information related to the HA selection condition and supply the results to the AAAh server 40. It should be noted that a HA may employ a method for transmitting a message to the MN 10 or another apparatus to obtain information related to the HA selection condition, or may obtain necessary information from storage means wherein information related to the HA selection condition is stored.

### <Eighth Embodiment>

An eighth embodiment of the present invention will now be described. A difference in the operation of the eighth embodiment of this invention from the operation described above, while referring to the sequence chart in Fig. 16, is that the optimal HA is selected by referring not only to information provided by the AAAh server 40 about a HA selection condition, but also to roaming information held by the AAAh server 40.

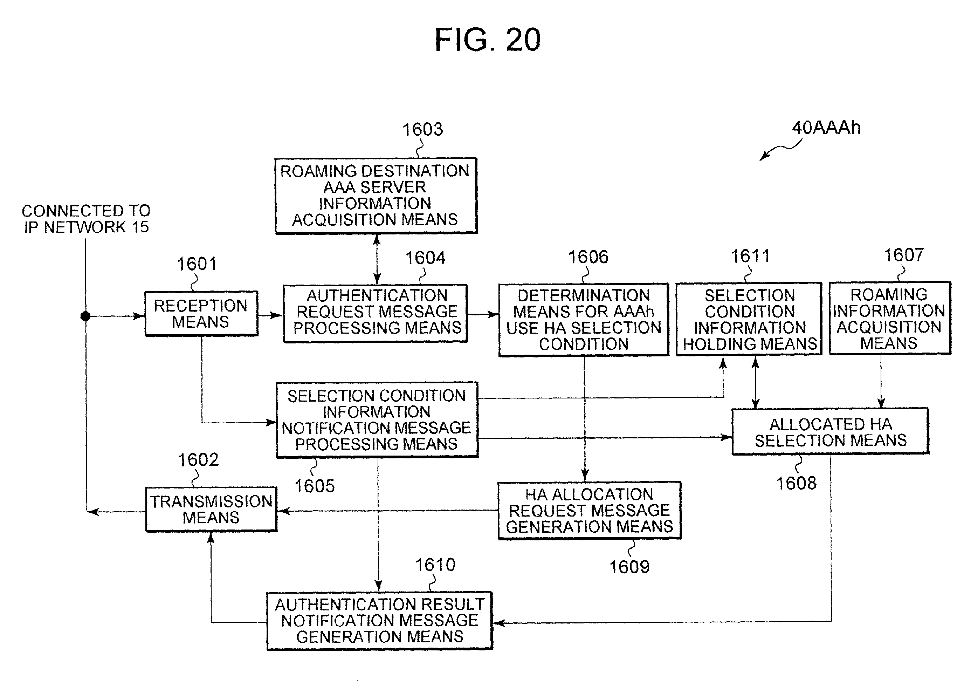

Furthermore, Fig. 20 is a block diagram showing an example configuration for the AAAh server 40 of the eighth embodiment of the present invention. It should be noted that in Fig. 20 the individual functions included in the AAAh server 40 are shown by using blocks, and can be provided by hardware and/or software.

The AAAh server 40 in Fig. 20 includes: reception means 1601; transmission means 1602; authentication request message processing means 1604; roaming destination AAA server information acquisition means 1603; determination means 1606, for a AAAh use HA selection condition; HA allocation request message generation means 1609; roaming information acquisition means 1607; selection condition information notification message processing means 1605; allocated HA selection means 1608; authentication result notification message generation means 1610; and selection condition information holding means 1611.

It can be said that the AAAh server 40 in this diagram is provided by replacing, with the authentication request message processing means 1604, the processing means 1404, for an authentication request message that includes a HA selection condition, of the AAAh server 40 in Fig. 13.

Since the flow of the processing performed for the eighth embodiment of this invention upon receiving an authentication request message is the same as the operation shown in Fig. 18, no explanation for it will be given.

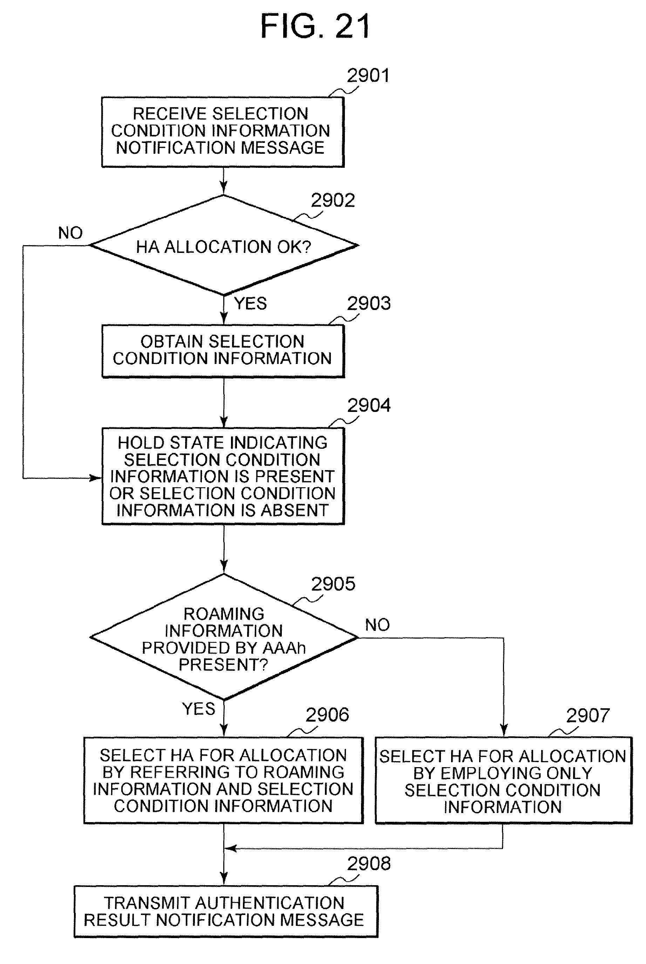

Further, Fig. 21 is a flowchart showing the flow of the processing performed when the AAAh server 40 in Fig. 17 receives a selection condition information notification message. When the AAAh server 40 receives a selection condition information notification message (2901), first, the AAAh server 40 determines whether the domain network at the transmission source of the message permits the allocation of a HA (2902). When the transmission source domain permits the allocation of a HA, the measurement results for the HA selection condition that is included in the message are obtained (2903) and this information is stored (2904).

On the other hand, when the allocation of a HA is not permitted, HA selection condition information can not be obtained, and information is stored that indicates there is no HA selection condition information (2904). And when the AAAh server 40 receives selection condition information notification messages from all the AAAv servers to which HA allocation request messages were transmitted, the AAAh server 40 determines whether a condition required for a roaming relationship to be used for the selection of a HA is present (2905). When a condition required for a roaming relationship to be used for the selection of a HA is present, the optimal HA is selected by employing both this information and the HA selection condition information obtained from the AAAv server 50 and the other AAAv server (2906). When a condition required for the roaming relationship is not present, the optimal HA is selected using only the HA selection condition information (2907). Then, an authentication result notification message that includes the selected HA is transmitted to the MN 10 (2908).

Since by employing this arrangement a HA is allocated for the MN 10 based on the HA selection condition presented by the AAAh server 40, effects are obtained such that a data packet dispatched by the MN 10, or a data packet dispatched by a communication side to the home address of the MN 10, is transmitted through the HA along the optimal path. Furthermore, since roaming information held by the AAAh server 40 is also referred to for the selection of a HA, new effects can be obtained such that a HA suitable for a HA selection condition desired by the AAAh server 40 can be selected, and that, from the viewpoint of the roaming relationship, a HA that is suitable for the AAAh server 40 can be selected.

It should be noted that the number of hops, the status of a QoS path or the cost, for example, can be employed as a HA selection condition.

Further, the AAAv server 50 and the other AAAv server, which have received the HA allocation requests from the AAAh server 40, may employ a method for transmitting messages to the MN 10 or another apparatus, and obtain information related to a HA selection condition, or may obtain necessary information from storage means wherein information related to a HA selection condition is stored.

On the other hand, when the individual AAAv servers receive the HA allocation requests, the AAAv servers transmit requests to HAs present within their domain networks to acquire information related to the HA selection condition, and upon receiving the requests, the HAs obtain information related to the HA selection condition and supply the results to the AAAv servers. It should be noted that a HA may employ a method for transmitting a message to the MN 10 or another apparatus to obtain information related to the HA selection condition, or may obtain necessary information from storage means wherein information related to the HA selection condition is stored.

### <Ninth Embodiment>

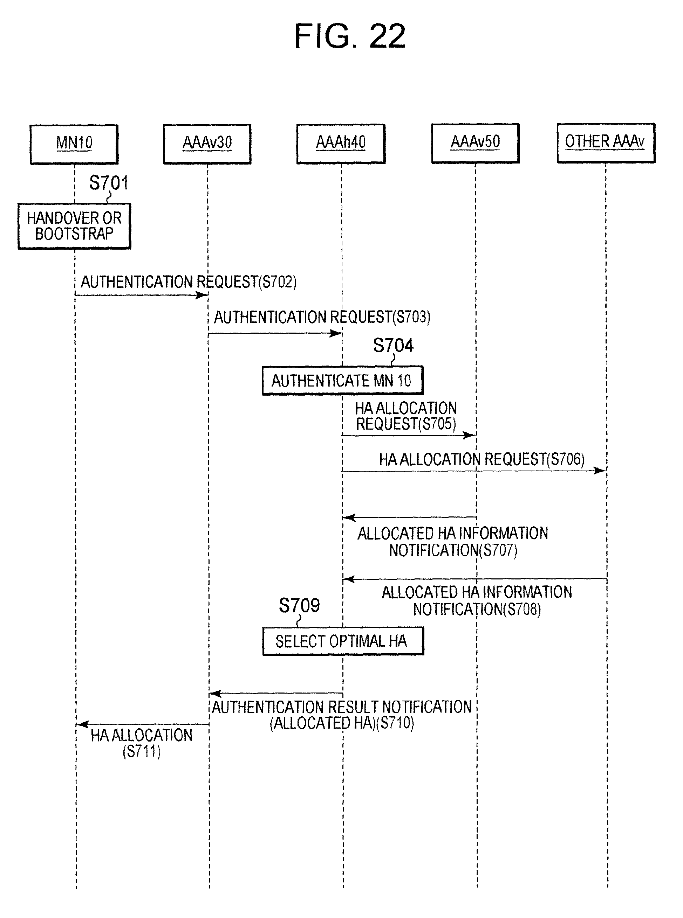

A ninth embodiment of the present invention will now be described. Fig. 22 is a sequence chart showing the primary processing for the ninth embodiment of the present invention. It should be noted that the sequence chart in Fig. 22 shows only the primary processing related to the present invention.

The sequence chart in Fig. 22 is a diagram showing a message sequence beginning at the time whereat a MN 10 has performed a handover from an external domain network 23 to an external domain network 33, or has executed a bootstrap. It should be noted that the moving source and the moving destination of the MN 10 are not limited to these, and as an example, a case may be employed wherein the MN 10 is moved from a domain network 43 to the external domain network 23.

When the MN 10 is connected to the external domain network 33 (S701), the MN 10 transmits a message to a AAAv server 30 through an authentication system to request authentication for the MN 10 (S702). Since the external domain network 33 is not the Home domain network 43 of the MN 10, the AAAv server 30 transfers the authentication request received from the MN 10 to a AAAh server 40 (S703).

The AAAh server 40 receives the authentication request transferred by the AAAv server 30 and authenticates the MN 10 (S704). Thereafter, in order to search for a HA to be allocated for the MN 10, the AAAh server 40 transmits a HA allocation request to a AAAv server 50, for which the lending or the borrowing of a HA is permitted, and to the other AAAv server (S705 and S706) .

Upon receiving the HA allocation requests from the AAAh server 40, the AAAv server 50 and the other AAAv server determine whether the function of a HA can be provided, and if it is available, transmit, to the AAAh server 40, reply messages that include information related to the HA (S707 and S708). From among the allocable HAs that are obtained from the individual AAAv servers, the AAAh server 40 selects a HA, by referring to the roaming information held by the AAAh server 40 (S709), and transmits the authentication results and information concerning the selected HA to the AAAv server 30 (5710).

When the AAAv server 30 receives the authentication results and the information for the allocated HA, the AAAv server 30 transmits these data to the MN 10 (5711). Thus, the MN 10 is assigned the optimal HA that is selected by referring to the roaming information held by the AAAh server 40.

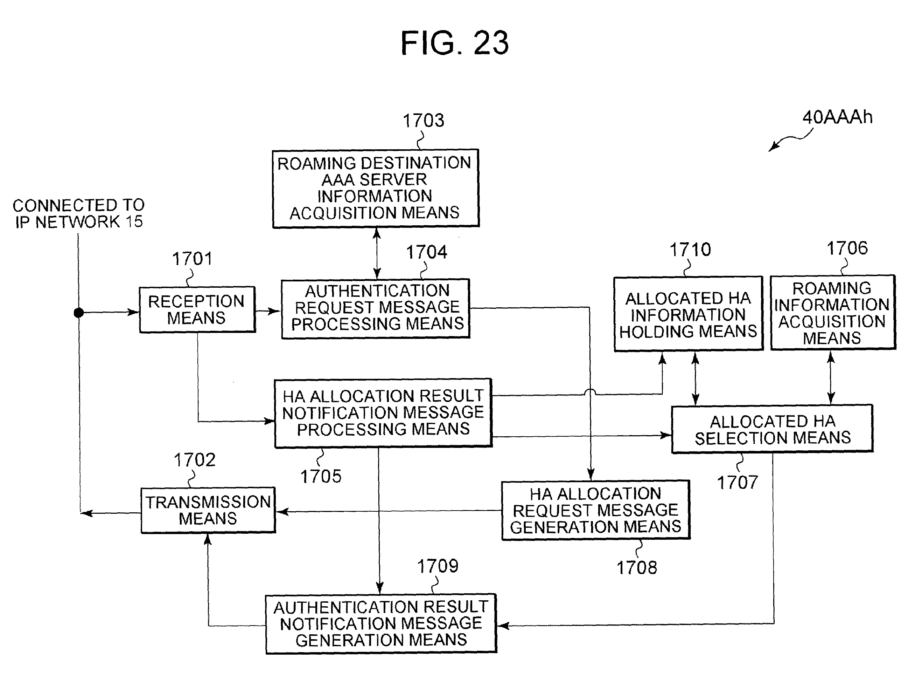

Further, Fig. 23 is a block diagram showing an example configuration for the AAAh server 40 of the ninth embodiment of the present invention. It should be noted that in Fig. 23 the individual functions included in the AAAh server 40 are shown by using blocks, and can be provided by hardware and/or software.

The AAAh server 40 in Fig. 23 includes: reception means 1701; transmission means 1702; authentication request message processing means 1704; roaming destination AAA server information acquisition means 1703; HA allocation request message generation means 1708; roaming information acquisition means 1706; HA allocation result notification message processing means 1705; allocated HA selection means 1707; authentication result notification message generation means 1709; and selection condition information holding means 1710.

It can be said that the AAAh server 40 in this diagram is provided by replacing, with the authentication request message processing means 1704, the processing means 1304, for an authentication request message that includes a HA selection condition, of the AAAh server 40 in Fig. 11, by replacing the selection condition information notification message processing means 1305 with the HA allocation result notification message processing means 1705, and by replacing the selection condition information holding means 1310 with the allocated HA information holding means 1710.

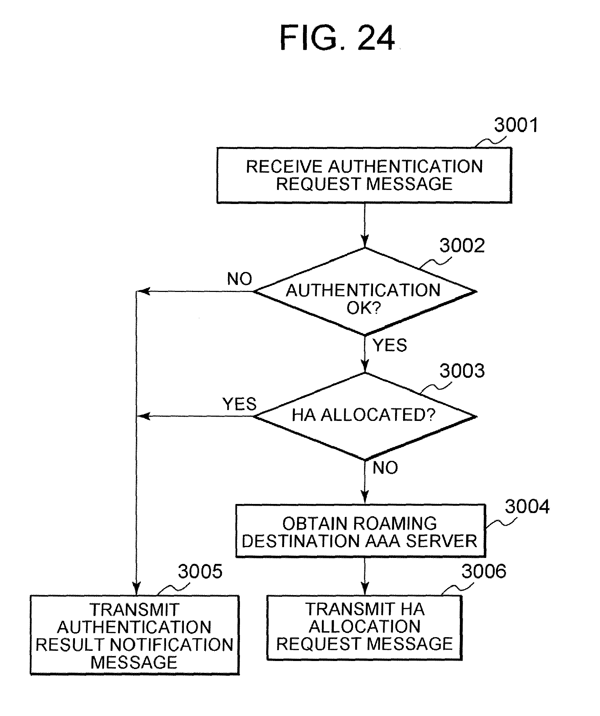

Fig. 24 is a flowchart showing the flow of the processing performed when the AAAh server 40 in Fig. 23 receives an authentication request message. When the AAAh server 40 receives an authentication request message (3001), first, the AAAh server 40 performs an authentication for the MN 10 that is requesting the authentication (3002). When the authentication has failed, an authentication result notification message to that effect is transmitted (3005). On the other hand, when the authentication is successful, a check is performed to determine whether a HA has been allocated by the AAAv server 30 that is the transmission source of this message (3003). When a HA has not been allocated, it is determined that the allocation of a HA for the MN 10 is required, information concerning AAA servers (e.g., the AAAv server 50 and the other AAAv server) for which the lending or the and borrowing of a HA is permitted is obtained (3004), and a HA allocation request message is transmitted to these AAAv servers to request the allocation of a HA (3006). It should be noted that in a case wherein the presence of an allocated HA is indicated in the authentication request message the AAAh server 40 transmits only the authentication results to the AAAv server 30 (3005).

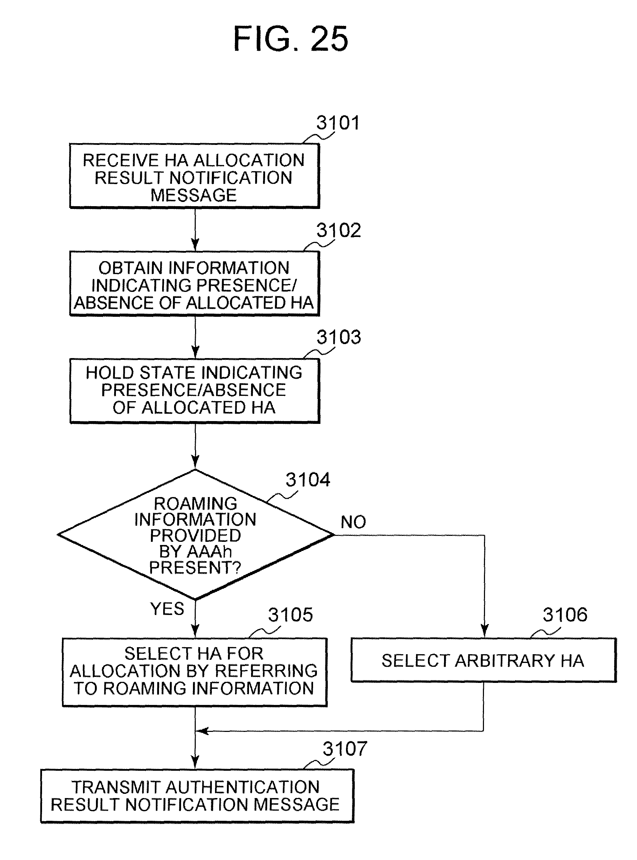

Furthermore, Fig. 25 is a flowchart showing the flow of the processing performed when the AAAh server 40 in Fig. 23 receives a HA allocation result notification message. When the AAAh server 40 receives a HA allocation result notification message (3101), first, the AAAh server 40 determines whether the transmission source domain for this message permits the allocation of a HA (3102), and holds this state (3103).

Then, when the AAAh server 40 has received selection condition information notification messages from all the AAAv servers to which the HA allocation request messages were transmitted, the AAAh server 40 determines whether a roaming condition used for HA selection is present (3104). When a roaming condition is present, this information is obtained, the optimal HA is selected based on the obtained roaming condition (3105), and the results obtained are transmitted as an authentication result notification message (3107). On the other hand, when a roaming condition is not present, an arbitrary HA is selected (3106) and the results are transmitted as an authentication result notification message (3107).

Since, by employing this arrangement, roaming information held by the AAAh server 40 is referred to for the selection of a HA, effects can be obtained such that a HA suitable for the AAAh server 40, from the viewpoint of the roaming relationship, is selected.

It should be noted that the individual functional blocks employed for the explanation of the embodiment of the present invention are obtained typically as LSI (Large Scale Integration) integrated circuits. These may be formed as individual chips, or may be formed as a single chip so as to cover part or all of them. It should be noted that an LSI is employed here, but depending on differences in the integration density, this may also be called an IC (Integrated Circuit), a system LSI, a super LSI or an ultra LSI.

Additionally, the integrated circuit formation method is not limited to the LSI, but is also applicable to a dedicated circuit or a general-purpose processor that may be employed. An FPGA (Field Programmable Gate Array) that is programmable after an LSI is produced, or a reconfigurable processor, for which the connection and the setup of a circuit cell inside an LSI is reconfigurable, may also be employed.

Moreover, when an integrated circuit technology that is employed in an LSI has appeared as a result of the development of semiconductor technology or another derivative technology, naturally, integration of the functional blocks may be performed using this technology. For example, it is possible that biotechnology may be adapted for use.

### INDUSTRIAL APPLICABILITY

The communication system, the mobile terminal and the authentication server according to the present invention provide effects such that the optimal HA can be allocated for a mobile terminal that has moved between domains, and are especially useful, as an example, for a communication system for mounting mobile IPv6.

## Claims

1. A communication system, which, when a mobile terminal is moved among a plurality of domain networks that are connected by an IP network and that provide a service for securing mobility for the mobile terminal, authenticates the mobile terminal and dynamically allocates, for the mobile terminal, a moving destination management server for managing a moving destination, comprising:
first authentication means, belonging to a first domain network included in the plurality of domain networks and having a mobile terminal authentication function;
second authentication means, belonging to a second domain network, which is included in the plurality of domain networks and which is a home network for the mobile terminal, and having a mobile terminal authentication function; and
third authentication means, belonging to a third domain network, for which a roaming relationship is established with the second domain network, and having a mobile terminal authentication function,
wherein, when the mobile terminal is moved from an arbitrary domain network to the first domain network, the second authentication means receives an authentication request message from the mobile terminal through the authentication means, performs an authentication for the mobile terminal, transmits a moving destination management server allocation request message to the third authentication means, employs information, which is based on the moving destination management server allocation request message, for enabling/disabling allocation for the mobile terminal of a moving destination management server that belongs to the third domain network, and selects a moving destination management server, to be allocated for the mobile terminal.

2. The communication system according to claim 1, wherein the second authentication means transmits to the third authentication means the moving destination management server allocation request message, including a moving destination management server selection condition determined by the second authentication means.

3. The communication system according to claim 1, wherein the second authentication means transmits to the third authentication means the moving destination management server allocation request message, including a moving destination management server selection condition determined by the first authentication means.

4. The communication system according to claim 1, wherein the second authentication means transmits to the third authentication means the moving destination management server allocation request message, including a moving destination management server selection condition that is received from the mobile terminal through the first authentication means.

5. The communication system according to claim 4, wherein the moving destination management server selection condition received by the second authentication means is provided for the authentication request message transmitted by the mobile terminal.

6. The communication system according to claim 1, wherein the second authentication means transmits to the third authentication means the moving destination management server allocation request message, including a plurality of selection conditions, chosen from among moving destination management server selection conditions determined by the second authentication means, a moving destination management server selection condition determined by the first authentication means, and a moving destination management server selection condition received from the mobile terminal through the first authentication means.

7. The communication system according to any one of claims 1 to 6, wherein the second authentication means selects a moving destination management server, to be allocated to the mobile terminal, by employing the allocation enabling/disabling information and roaming information related to the plurality of domain networks.

8. The communication system according to claim 1,
wherein the second authentication means transmits to the third authentication means the moving destination management server allocation request message, including a moving destination management server selection condition; and
wherein the third authentication means obtains selection condition information related to the moving destination management server selection conditions for the third domain network, and transmits the selection condition information as the allocation enabling/disabling information to the second authentication means.

9. A mobile terminal, which is capable of moving among a plurality of domain networks connected by an IP network and which is capable of being connected to a communication system that includes: first authentication means, belonging to a first domain network included in the plurality of domain networks and having a mobile terminal authentication function; second authentication means, belonging to a second domain network that is included in the plurality of domain networks and is a home network for the mobile terminal, and having a mobile terminal authentication function; and third authentication means, belonging to a third domain network, for which a roaming relationship is established with the second domain network, and having a mobile terminal authentication function, and to which a moving destination management server that manages a moving destination is to be dynamically allocated, comprising:
message transmission means, for transmitting, when the mobile terminal is moved from an arbitrary domain to the first domain network, an authentication request message through the first authentication means to the second authentication means; and
information acquisition means for obtaining, from the second authentication means through the first authentication means, information for the moving destination management server allocated by the second authentication means.

10. The mobile terminal according to claim 9, further comprising:
selection condition provision means, for providing a moving destination management server selection condition for the authentication request message.

11. An authentication server, which is included in a communication system that, when a mobile terminal is moved between a plurality of domain networks that are connected by an IP network and that provide a service for obtaining mobility for the mobile terminal, authenticates the mobile terminal and dynamically allocates to the mobile terminal a moving destination management server for managing a moving destination, comprising:
authentication request message reception means, for receiving an authentication request message from the mobile terminal;
authentication means, for employing the authentication request message to authenticate the mobile terminal;
allocation request message transmission means for transmitting, after authentication by the authentication means is completed, a moving destination management server allocation request message to a different authentication server;
allocation enabling/disabling information reception means, for receiving, from the different authentication server, allocation enabling/disabling information about the moving destination management server relative to the mobile terminal;
moving destination management server selection means, for employing the allocation enabling/disabling information to select the moving destination management server to be allocated to the mobile terminal; and
moving destination management server notification means, for notifying the mobile terminal of the selected moving destination management server.

12. The authentication server according to claim 11, further comprising:
selection condition provision means, for providing a moving destination management server selection condition for the moving destination management server allocation request message.

13. The authentication server according to claim 12, further comprising:
selection condition determination means, for determining the moving destination management server selection condition and for notifying the selection condition provision means of the moving destination management server selection condition.

14. The authentication server according to claim 13, wherein the moving destination management server selection condition is included in the authentication request message.

15. The authentication server according to claim 13, further comprising:
selection condition generation means, for voluntarily generating the moving destination management server selection condition.

16. The authentication server according to claim 13, wherein the selection condition determination means determines the moving destination management server selection condition, employing both a first moving destination management server selection condition, included in the authentication request message, and a second moving destination management server selection condition, voluntarily generated by the selection condition generation means.

17. The authentication server according to any one of claims 11 to 16, wherein the moving destination management server selection means selects the moving destination management server to be allocated to the mobile terminal, using the allocation enabling/disabling information and roaming information related to the plurality of domain networks.
